# EUROPEAN PATENT SPECIFICATION

(11) **EP 2 088 721 B1**
(45) Date of publication and mention of the grant of the patent: **03.07.2013**
(21) Application number: 08715208.8
(22) Date of filing: 11.03.2008
(51) Int. Cl.: H04L 12/70

(54) **METHOD, DEVICE AND SYSTEM FOR MEASURING THE NETWORK PERFORMANCE BETWEEN OVERLAY NETWORK NODES**
VERFAHREN, VORRICHTUNG UND SYSTEM ZUR MESSUNG DER NETZWERKLEISTUNG ZWISCHEN KNOTEN EINES OVERLAY NETZWERKS
PROCEDE, DISPOSITIF ET SYSTÈME DE MESURE DE LA PERFORMANCE réseau entre les noeuds d'un réseau de superpositon

(30) Priority: 16.03.2007 CN 200710073587
(43) Date of publication of application: 12.08.2009
(73) Proprietor: Huawei Technologies Co., Ltd., Longgang District, Shenzhen Guangdong 518129 (CN)
(72) Inventor: GUAN, Hongguang, Guangdong 518129 (CN)
(74) Representative: Kreuz, Georg Maria
(86) International application number: PCT/CN2008/070472
(87) International publication number: WO 2008/113288

(56) References cited:
- WO-A-01/37486
- CN-A- 1 889 519
- US-A1- 2003 162 499
- US-A1- 2004 085 912
- US-A1- 2005 015 511
- US-A1- 2005 083 848
- US-A1- 2005 238 017
- ACM, 2 PENN PLAZA, SUITE 701 - NEW YORK USA, 1 January 2000 (2000-01-01), XP040112239

## Description

### FIELD OF THE INVENTION

The disclosure relates to a measuring technology in the field of communication networks, and more particularly to a method, device, and system for measuring inter-node network performances in an overlay network.

### BACKGROUND

An overlay network is a network topology structure operating on an application layer, which implements specific services by constructing a network topology between nodes on the application layer. Typical applications of the overlay network include, for example, content delivery network (CDN), peer-to-peer (P2P) network, and application-layer multicast (ALM).

The overlay network is constructed through interconnections between nodes on the application layer. During the construction of the overlay network, in order to reduce alternative routes in the network, performances such as distances between the nodes and delays and bandwidths of the nodes in the overlay network as well as service processing capabilities of the nodes need to be measured, so that the nodes having more desirable network paths and service processing capabilities are selected for data transmission, and an efficient overlay network may be constructed.

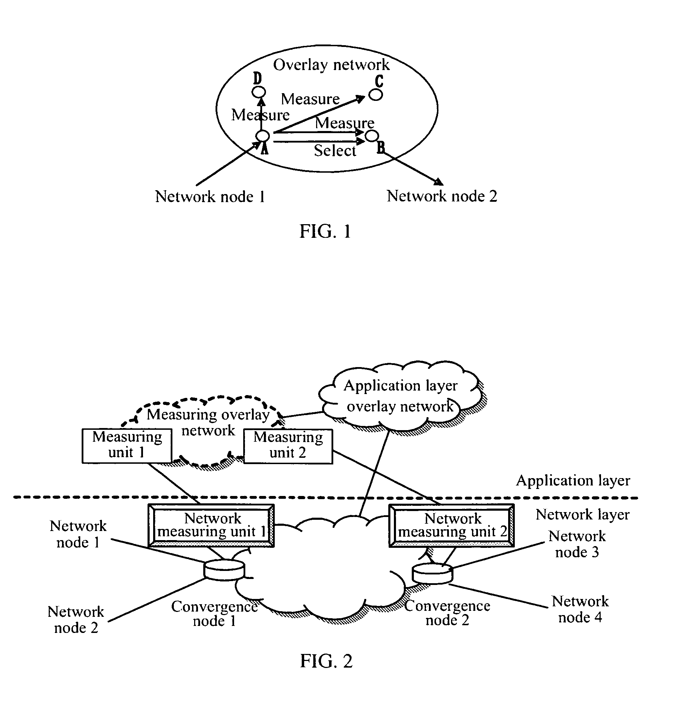

Currently, the measurement of inter-node network performances in the overlay network is generally implemented by configuring measuring units in the overlay network. FIG. 1 is a schematic view illustrating a real-time measurement of inter-node network performances between network nodes in the prior art. Referring to FIG. 1, overlay nodes A, B, C, and D constitute an overlay network on an application layer, and a network node 1 requests services on the network node 2 through the overlay network. If the nodes B, C, and D all reach the network node 2, the node A needs to send data packets in real time to the nodes B, C, and D to be measured, and then select optimal transmission paths from the network node 1 to the network node 2 according to feedbacks from the nodes B, C, D, for example, distances, transmission delays, and available bandwidths.

In the implementation of the disclosure, the inventor finds that the prior art at least has the following problems.

The above measurement is mainly performed to optimize the network transmission paths. However, as the performances of the network transmission paths, for example, network distances, transmission delays, and available bandwidths of the nodes, are all attributes of the network layer, when these attributes are measured between the nodes (A, B, C, and D) on the application layer, not only the overhead is high, the measurement results are also inaccurate. In specific, for the voice service having strict requirements on delay, this real-time measuring method may cause a delay that seriously affects the service quality. In addition, as data storage is not carried out during the real-time measurement, static data, such as distances, needs to be repeatedly measured, thus resulting in additional bandwidth consumption. Moreover, when dynamic data, such as bandwidth allocations, is measured, accurate measurement results may not be obtained through the measuring method on the application layer based on sending data packets.
ACM, 2 PENN PLAZA, SUIT 701-NEW YORK, USA, 1 JANURARY 2000, XP040112239 discloses a method for monitoring QoS distribution in multimedia network. One approach involves that when monitoring a real-time flow, a network manager locates relevant monitors that are metering the flow, and retrieves traffic information from them simultaneously. Furthermore, by consolidating the information from these monitors that are embedded in different network segments, not only can end-to-end QoS be monitored, but the QoS distribution in different network segments for this flow can also be derived.
PCT Patent Application WO 01/37486 A discloses a method for determining the delay and jitter in communication between objects in a connected network. One approach involves a) sending a first signal from a common node to a first node; b) receiving a response signal at the common node from the first node in response to the first signal; c) determining a first round trip time, the first round trip time being a time elapsed between a) and b); d) sending a second signal from a common node to a second node; e) receiving a response signal at the common node from the second node in response to the second signal; f) determining a second round trip time, the second round trip time being a time elapsed between d) and e); f) calculating a transmit delay between the first node and the second node according to a formula.

### SUMMARY

Accordingly, in order to solve the problems of measurement delay and measurement result inaccuracy when inter-node network performances in an overlay network are measured in the prior art, various embodiments of the disclosure provide the following technical solutions, including a method, device, and system for measuring inter-node network performances in an overlay network, as set forth in the independent claims. The dependent claims refer to the prefered embodiments thereof.

A method for measuring inter-node network performances in an overlay network includes the following steps:

Network measuring units and convergence nodes corresponding to source network nodes and target network nodes are searched for respectively.

It is determined whether the source network nodes and the target network nodes correspond to the same convergence node.

If the source network nodes and the target network nodes correspond to the same convergence node, the network measuring unit corresponding to the source network nodes measures inter-node network performances between the source network nodes and the convergence node to obtain a first inter-node network performance, and the network measuring unit corresponding to the target network nodes measures inter-node network performances between the target network nodes and the convergence node to obtain a second inter-node network performance.

Measuring units calculate inter-node network performances between the source network nodes and the target network nodes according to the first inter-node network performance and the second inter-node network performance.

If the source network nodes and the target network nodes respectively correspond to different convergence nodes, the network measuring unit corresponding to the source network nodes measures inter-node network performances between the source network nodes and the convergence node corresponding to the source network nodes to obtain a third inter-node network performance; the network measuring unit corresponding to the target network nodes measures inter-node network performances between the target network nodes and the convergence node corresponding to the target network nodes to obtain a fourth inter-node network performance; and the network measuring unit corresponding to the source network nodes and/or the network measuring unit corresponding to the target network nodes measure inter-node network performances between the convergence node corresponding to the source network nodes and the convergence node corresponding to the target network nodes to obtain a fifth inter-node network performance.

The measuring units calculate inter-node network performances between the source network nodes and the target network nodes according to the third inter-node network performance, the fourth inter-node network performance, and the fifth inter-node network performance.

Another method for measuring inter-node network performances in an overlay network includes the following steps.

Network measuring units and convergence nodes corresponding to source network nodes and target network nodes are searched for respectively.

The network measuring unit corresponding to the source network nodes measures inter-node network performances between the source network nodes and the convergence node corresponding to the source network nodes to obtain a first inter-node network performance; and the network measuring unit corresponding to the target network nodes measures inter-node network performances between the target network nodes and the convergence node corresponding to the target network nodes to obtain a second inter-node network performance.

Determine whether the source network nodes and the target network nodes correspond to the same convergence node.

If the source network nodes and the target network nodes correspond to the same convergence node, inter-node network performances between the source network nodes and the target network nodes are calculated according to the first inter-node network performance and the second inter-node network performance.

If the source network nodes and the target network nodes respectively correspond to different convergence nodes, the network measuring unit corresponding to the source network nodes and/or the network measuring unit corresponding to the target network nodes measure inter-node network performances between the convergence node corresponding to the source network nodes and the convergence node corresponding to the target network nodes to obtain a third inter-node network performance.

Inter-node network performances between the source network nodes and the target network nodes are calculated according to the first inter-node network performance, the second inter-node network performance, and the third inter-node network performance.

A network measuring unit includes a receiving module, a measuring module, and a forwarding module.

The receiving module is adapted to receive a measuring command of inter-node network performance, and forward the measuring command of inter-node network performance to the measuring module.

The measuring module is adapted to receive the measuring command of inter-node network performance forwarded by the receiving module, measure inter-node network performances between network nodes and a convergence node, and send the network performances to the forwarding module; alternatively, the measuring module is adapted to measure inter-node network performances between different convergence nodes according to the measuring command of inter-node network performance forwarded by the receiving module, and then send the network performances to the forwarding module.

A measuring unit, configured in a measuring overlay network, includes a measuring command processing module and an inter-node network performance processing module.

The measuring command processing module is adapted to receive a measuring command of inter-node network performance sent by an application layer overlay network, and send the measuring command of inter-node network performance to a network measuring unit corresponding to source network nodes and a network measuring unit corresponding to target network nodes.

The inter-node network performance processing module is adapted to receive inter-node network performances sent by the network measuring units, process the inter-node network performances to obtain inter-node network performances between the source network nodes and the target network nodes, and send the inter-node network performances between the source network nodes and the target network nodes to the application layer overlay network.

A system for measuring inter-node network performances in an overlay network includes network nodes in an application layer overlay network; further includes convergence nodes, network measuring units, and at least one measuring unit; the network nodes access the network layer through the convergence nodes.

The measuring unit is adapted to receive a measuring command of inter-node network performance sent by the application layer overlay network, and send the measuring command of inter-node network performance to the network measuring unit corresponding to source network nodes and the network measuring unit corresponding to target network nodes, in which the measuring command of inter-node network performance carries convergence node information associated with the network measuring units.

The measuring unit is also adapted to receive inter-node network performances sent by the network measuring units, process the inter-node network performances to obtain inter-node network performances between the source network nodes and the target network nodes, and send the inter-node network performances between the source network nodes and the target network nodes to the application layer overlay network.

The network measuring units are adapted to receive the measuring command of inter-node network performance forwarded by the measuring unit, and measure inter-node network performances between the convergence node and the network nodes, or measure inter-node network performances between the convergence nodes and the network nodes and between the different convergence nodes.

By implementing the disclosure, inter-node network performances between overlay nodes on an application layer can be accurately measured; furthermore, the disclosure may also be integrated with existing network equipment, so as to reduce the measuring cost and bandwidth consumption.

### BRIEF DESCRIPTION OF THE DRAWINGS

FIG. 1 is a schematic view illustrating a real-time measurement of inter-node network performances between overlay nodes in the prior art;

FIG. 2 is a schematic view of a system for measuring inter-node network performances between overlay nodes according to an embodiment of the disclosure;

FIG. 3 is a schematic structural view of a network measuring unit according to an embodiment of the disclosure;

FIG. 4 is a schematic structural view of a measuring module in the network measuring unit according to an embodiment of the disclosure;

FIG. 5 is a schematic structural view of a measuring unit according to an embodiment of the disclosure;

FIG. 6 is a schematic structural view of a measuring command processing module and an inter-node network performance processing module in the measuring unit according to an embodiment of the disclosure;

FIG. 7 is a detailed schematic structural view of the measuring unit according to an embodiment of the disclosure;

FIG. 8 is a flow chart of a method for measuring inter-node network performances between network nodes according to an embodiment of the disclosure; and

FIG. 9 is a flow chart of another method for measuring inter-node network performances between network nodes according to an embodiment of the disclosure.

### DETAILED DESCRIPTION

In order to make the advantages of the technical solutions of the disclosure comprehensible, embodiments of the disclosure are described in detail below with reference to the accompanying drawings. It should be noted that, the following descriptions are only illustrative, but are not intended to limit the disclosure.

In order to solve the problems of measurement delay and measurement result inaccuracy when inter-node network performances in an overlay network are measured in the prior art, the disclosure provides a system for measuring inter-node network performances in an overlay network.

FIG. 2 is a schematic view of a system for measuring inter-node network performances between overlay nodes according to an embodiment of the disclosure. As shown in FIG. 2, the system includes multiple network nodes, a measuring overlay network constituted by at least one measuring unit, convergence nodes, and network measuring units. The network nodes 1 to 4 access a network layer through the convergence nodes.

The network nodes are adapted to send a measuring command of inter-node network performance to the measuring units in the measuring overlay network according to service requirements, and on an application layer, the network nodes are referred to as overlay nodes. Multiple network nodes may constitute an application layer overlay network according to service requirements. The application layer overlay network may send the measuring command of inter-node network performance to the measuring overlay network through an access network node, and any network node in the application layer overlay network may serve as the access network node.

The measuring units are adapted to receive a measuring command of inter-node network performance sent by the application layer overlay network, and send the measuring command of inter-node network performance to a network measuring unit corresponding to source network nodes and a network measuring unit corresponding to target network nodes, in which the measuring command of inter-node network performance carries convergence node information corresponding to the network measuring units. In addition, in the measuring overlay network, the measuring command may be received through an access measuring unit, and any measuring unit in the measuring overlay network may serve as the access measuring unit.

The measuring units are also adapted to receive inter-node network performances, process the inter-node network performances to obtain inter-node network performances between the source network nodes and the target network nodes, and send the inter-node network performances between the source network nodes and the target network nodes to the application layer overlay network. If the measuring unit is an access measuring unit, the measuring unit receives inter-node network performances sent by the network measuring units and other measuring units, and processes the received inter-node network performances to obtain inter-node network performances between the source network nodes and the target network nodes. If the measuring unit is not an access measuring unit, the measuring unit receives the inter-node network performances sent by the network measuring units, and then forwards the received network performances to the access measuring unit, so that the access measuring unit processes the network performances to obtain inter-node network performances between the source network nodes and the target network nodes.

The measuring units are further adapted to store corresponding relations between the measuring units, the network nodes, the convergence nodes, and the network measuring units or corresponding relations between the measuring units, the network nodes, and the network measuring units, receive the measuring command of inter-node network performance sent by the network nodes in the application layer overlay network, searches for the network measuring units and the convergence nodes that are specifically configured to measure the network performances associated with the network nodes, and forward the measuring command of inter-node network performance to the network measuring units searched out.

The network measuring units are adapted to receive the measuring command of inter-node network performance forwarded by the measuring units in the measuring overlay network, measure inter-node network performances between the convergence nodes and the network nodes, or measure inter-node network performances between the convergence nodes and the network nodes and between different convergence nodes, and then send the measured inter-node network performances to the measuring units in the measuring overlay network.

The convergence nodes may be convergence devices such as broadband remote access servers (BRASs), which are adapted to connect network nodes in a certain region to the network layer.

The measuring units in the measuring overlay network may be application layer overlay nodes or independent nodes other than the application layer overlay nodes. The measuring units store corresponding relations between the measuring units, the network nodes, the convergence nodes, and the network measuring units or corresponding relations between the measuring units, the network nodes, and the network measuring units. Each measuring unit performs information exchange only with several network measuring units according to the principle of proximity. The corresponding relations between the network nodes, the convergence nodes, the network measuring units, and the measuring units as shown in the network of FIG. 2 can be expressed as follows:

| Network Node | Convergence Node | Network Measuring Unit | Measuring Unit |
|---|---|---|---|
| Network node 1 | Convergence node 1 | Network measuring unit 1 | Measuring unit 1 |
| Network node 2 | | | |
| Network node 3 | Convergence node 2 | Network measuring unit 2 | Measuring unit 2 |
| Network node 4 | | | |

The corresponding relations may be in other forms, as long as the convergence nodes and the network measuring units corresponding to the network nodes can be searched for rapidly. Each network measuring unit may correspond to one or more convergence nodes.

When measuring the inter-node network performances between the source network nodes and the target network nodes, after the network measuring units and the convergence nodes corresponding to the source network nodes and the target network nodes are respectively searched for, it is determined whether the source network nodes and the target network nodes correspond to the same convergence node.

If the source network nodes and the target network nodes correspond to the same convergence node, it is necessary to respectively measure inter-node network performances between the source network nodes and the convergence node and inter-node network performances between the target network nodes and the convergence node, and then calculate the inter-node network performances between the source network nodes and the target network nodes according to the inter-node network performances between the source network nodes and the convergence node and the inter-node network performances between the target network nodes and the convergence node.

If the source network nodes and the target network nodes correspond to different convergence nodes, it is needed to respectively measure inter-node network performances between the source network nodes and the corresponding convergence node, inter-node network performances between the target network nodes and the corresponding convergence node, and inter-node network performances between the convergence node corresponding to the source network nodes and the convergence node corresponding to the target network nodes, and then calculate the inter-node network performances between the source network nodes and the target network nodes according to the network performances measured above.

Definitely, after the network measuring units and the convergence nodes corresponding to the source network nodes and the target network nodes are respectively searched for, the inter-node network performances between the source network nodes and the corresponding convergence node and the inter-node network performances between the target network nodes and the corresponding convergence node may be measured first, and then it is determined whether the source network nodes and the target network nodes v to the same convergence node.

If the source network nodes and the target network nodes correspond to the same convergence node, inter-node network performances between the source network nodes and the target network nodes are calculated according to the measured inter-node network performances between the source network nodes and the convergence node corresponding thereto and the inter-node network performances between the target network nodes and the convergence node corresponding thereto.
If the source network nodes and the target network nodes respectively correspond to different convergence nodes, it is still needed to measure inter-node network performances between the convergence node corresponding to the source network nodes and the convergence node corresponding to the target network nodes, and then calculate the inter-node network performances between the source network nodes and the target network nodes according to the measured inter-node network performances between the source network nodes and the corresponding convergence node, the inter-node network performances between the target network nodes and the corresponding convergence node, and the inter-node network performances between the convergence node corresponding to the source network nodes and the convergence node corresponding to the target network nodes.

The system structure in FIG. 2 is taken as an example to illustrate the implementation of the system of this embodiment. As shown in FIG. 2, when the network node 1 requests services on the network node 3 through the application layer overlay network, the application layer overlay network constituted by multiple network nodes sends a measuring command of inter-node network performance to the measuring overlay network, and the measuring overlay network respectively queries the measuring units that manage the network node 1 and the network node 3 on the measuring overlay network after receiving the measuring command. The measuring command of inter-node network performance may be sent from the application layer overlay network to the measuring overlay network through the access network node, and may also be received through the access measuring unit on the measuring overlay network.

In this embodiment, the measuring unit 1 manages the network node 1, and the measuring unit 2 manages the network node 3. The measuring unit 1 and the measuring unit 2 respectively search for corresponding relations between the measuring units, the network nodes, the convergence nodes, and the network measuring units or corresponding relations between the measuring units, the network nodes, and the network measuring units stored therein. The measuring unit 1 finds that the network node 1 corresponds to the network measuring unit 1, and accesses the network layer through the convergence node 1. The measuring unit 2 finds that the network node 3 corresponds to the network measuring unit 2, and accesses the network layer through the convergence node 2. Thereby, the measuring unit 1 sends a measuring command of inter-node network performance to the network measuring unit 1, and the network measuring unit 1 measures the inter-node network performances between the network node 1 and the convergence node 1. The measuring unit 2 sends a measuring command of inter-node network performance to the network measuring unit 2, and the network measuring unit 2 measures the inter-node network performances between the network node 3 and the convergence node 2. These performances include parameters such as transmission distances between two nodes, delays, and bandwidths that need to be considered in network connection.

As the network node 1 and the network node 3 correspond to different convergence nodes, in order to obtain the inter-node network performances between the network node 1 and the network node 3, the inter-node network performances between the convergence node 1 and the convergence node 2 still need to be measured. This measurement may be realized according to a predetermined policy by the network measuring unit 1 under the command of the measuring unit 1, or by the network measuring unit 2 under the command of the measuring unit 2, or by the network measuring unit 1 together with the network measuring unit 2.

The network measuring units measure the inter-node network performances section by section, and feed back the measurement results to the corresponding measuring units in the measuring overlay network. In this embodiment, the network measuring unit 1 feeds back the measurement result to the measuring unit 1, and the network measuring unit 2 feeds back the measurement result to the measuring unit 2.

As shown in FIG. 2, any measuring unit in the measuring overlay network may serve as the access measuring unit in the measuring overlay network, so as to receive the measuring command of inter-node network performance sent by the application layer overlay network.

The access measuring unit may be the measuring unit 1. At this point, the measuring unit 2 forwards the measurement result fed back by the network measuring unit 2 to the measuring unit 1, and the measuring unit 1 calculates the inter-node network performances between the source network node 1 and the target network node 3 according to the inter-node network performances sent by the network measuring unit 1 and the measuring unit 2.

The access measuring unit may also be the measuring unit 2. At this point, the measuring unit 1 forwards the measurement result fed back by the network measuring unit 1 to the measuring unit 2, and the measuring unit 2 calculates the inter-node network performances between the source network node 1 and the target network node 3 according to the inter-node network performances sent by the network measuring unit 2 and the measuring unit 1.

The access measuring unit may also be another measuring unit besides the measuring unit 1 and the measuring unit 2. At this point, the measuring unit 1 and the measuring unit 2 send the obtained inter-node network performances to the access measuring unit respectively, so that the access measuring unit calculates the inter-node network performances between the source network node 1 and the target network node 3, and sends the calculation result to the application layer overlay network.

The measuring unit 1 or the measuring unit 2 may also first calculate the inter-node network performances between the source network node 1 and the target network node 3, and then send the calculation result to the access measuring unit in the measuring overlay network, so that the access measuring unit directly sends the calculation result to the application layer overlay network.

When the network node 1 requests services on the network node 2 through the application layer overlay network, as the network node 1 and the network node 2 both correspond to the convergence node 1, the network measuring unit 1 respectively measures the inter-node network performances between the network node 1 and the convergence node 1 and between the network node 2 and the convergence node 1 as described above, and then feeds back the measurement results to the measuring unit 1. If the measuring unit 1 is the access measuring unit in the measuring overlay network, the measuring unit 1 calculates the inter-node network performances between the source network node 1 and the target network node 2.

If the measuring unit 1 is not the access measuring unit in the measuring overlay network, the measuring unit 1 calculates the inter-node network performances between the source network node 1 and the target network node 2 according to the result fed back by the network measuring unit, and then sends the calculated network performances to the access measuring unit, so that the access measuring unit directly sends the calculation result to the application layer overlay network. Alternatively, the measuring unit 1 sends the inter-node network performances between the network node 1 and the convergence node 1 and between the network node 2 and the convergence node 1 fed back by the network measuring unit 1 to the access measuring unit, so that the access measuring unit calculates the inter-node network performances between the source network node 1 and the target network node 2, and sends the calculation result to the application layer overlay network.

During the measurement, if the non-real-time inter-node network performances such as transmission distances are measured, it is required that the measured inter-node network performances should not change with the timed dynamically, so that the measuring units first obtain the inter-node network performances between the source network nodes and the target network nodes, and then store the non-real-time inter-node network performances between the source network nodes and the target network nodes. Thereby, the stored inter-node network performances can be directly invoked in the subsequent measurement.

The non-real-time inter-node network performances may also be stored on the network measuring units, for example, the inter-node network performances between the network node 1 and the convergence node 1 may be stored on the network measuring unit 1. As such, the network measuring unit may directly invoke the stored inter-node network performances when receiving a command for measuring the non-real-time inter-node network performances sent by the measuring unit.

If the real-time inter-node network performances such as bandwidths and delays are measured, it is required that the measured inter-node network performances should change with the time dynamically, so that the measuring unit obtains the measurement result and then directly sends the obtained result to the application layer overlay network.

In an embodiment, the disclosure further provides a network measuring unit, which is adapted to measure performances between network nodes. The performances between the network nodes include the inter-node network performances between network nodes and a convergence node and between different convergence nodes.

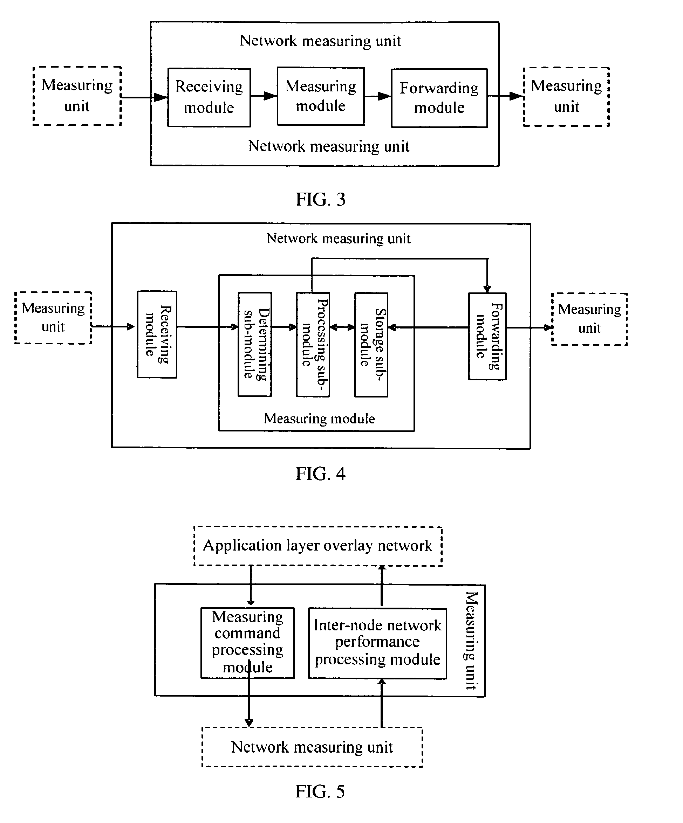

FIG. 3 is a schematic structural view of a network measuring unit according to an embodiment of the disclosure. The network measuring unit includes a receiving module, a measuring module, and a forwarding module.

The receiving module is adapted to receive a measuring command of inter-node network performance from a measuring unit, and forward the measuring command of inter-node network performance to the measuring module.

The measuring module is adapted to receive the measuring command of inter-node network performance forwarded by the receiving module, measure inter-node network performances between network nodes and a convergence node, and send the inter-node network performances to the forwarding module; alternatively, the measuring module is adapted to measure inter-node network performances between different convergence nodes according to the measuring command of inter-node network performance forwarded by the receiving module, and then send the inter-node network performances to the forwarding module.

The forwarding module is adapted to forward the inter-node network performances.

Further, as shown in FIG. 4, the measuring module includes a determining sub-module, a processing sub-module, and a storage sub-module.

The determining sub-module is adapted to determine whether the measuring command of inter-node network performance sent by the receiving module is a real-time or non-real-time measuring command of inter-node network performance, and feed back a determination result to the processing sub-module.

The processing sub-module is adapted to process according to the determination result from the determining sub-module; if the measuring command of inter-node network performance is a real-time measuring command, the processing sub-module executes the measuring command of inter-node network performance, and directly sends the measured inter-node network performances to the forwarding module; and if the measuring command of inter-node network performance is a non-real-time measuring command, the processing sub-module queries the storage sub-module to determine whether any inter-node network performances that need to be queried are stored therein; if yes, the processing sub-module reads the inter-node network performances from the storage sub-module and send the network performances to the forwarding module; otherwise, the processing sub-module executes the measuring command of inter-node network performance, and sends the measured inter-node network performances to the storage sub-module and the forwarding module.

The storage sub-module is adapted to store non-real-time inter-node network performances sent by the processing sub-module.

In addition, the performances between the network nodes include the inter-node network performances between the network nodes and the convergence node and between different convergence nodes.

In an embodiment, the disclosure further provides a measuring unit, which is configured in a measuring overlay network.

FIG. 5 is a schematic structural view of a measuring unit according to an embodiment of the disclosure. The measuring unit includes a measuring command processing module and an inter-node network performance processing module.

The measuring command processing module is adapted to receive a measuring command of inter-node network performance sent by an application layer overlay network, and send the measuring command of inter-node network performance to a network measuring unit corresponding to source network nodes and a network measuring unit corresponding to target network nodes.

The inter-node network performance processing module is adapted to receive inter-node network performances sent by the network measuring units, process the inter-node network performances to obtain inter-node network performances between the source network nodes and the target network nodes, and send the inter-node network performances between the source network nodes and the target network nodes to the application layer overlay network.

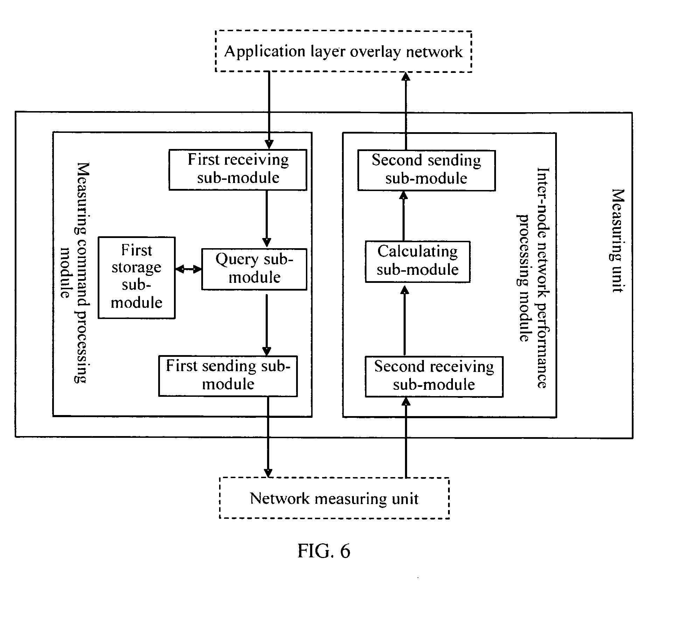

As shown in FIG. 6, the measuring command processing module includes a first receiving sub-module, a first storage sub-module, a query sub-module, and a first sending sub-module.

The first receiving sub-module is adapted to receive a measuring command of inter-node network performance from the application layer overlay network, and send the measuring command to the query sub-module.

The first storage sub-module is adapted to store corresponding relations between the network nodes, convergence nodes, network measuring units, and measuring units in network deployment.

The query sub-module is adapted to search for the network measuring units, the convergence nodes, and the measuring units respectively corresponding to the source network nodes and the target network nodes from the corresponding relations stored in the first storage sub-module according to the measuring command of inter-node network performance sent by the first receiving sub-module.

The first sending sub-module is adapted to send the measuring command of inter-node network performance to the network measuring units respectively corresponding to the source network nodes and the target network nodes queried by the query sub-module.

The inter-node network performance processing module includes a second receiving sub-module, a calculating sub-module, and a second sending sub-module.

The second receiving sub-module is adapted to receive inter-node network performances from the network measuring units, and send the received network performances to the calculating sub-module; the inter-node network performances include the inter-node network performances between the network nodes and the convergence node, or between the network nodes and the convergence nodes and between different convergence nodes.

The calculating sub-module is adapted to calculate inter-node network performances between the source network nodes and the target network nodes according to the inter-node network performances sent by the second receiving module, and then send the calculated network performances to the second sending sub-module.

The second sending sub-module is adapted to receive the inter-node network performances between the source network nodes and the target network nodes, and forward the network performances to the application layer overlay network.

If the measuring unit is an access measuring unit in the measuring overlay network, the second receiving sub-module is further adapted to receive inter-node network performances sent by other measuring units.

If the measuring unit is not an access measuring unit in the measuring overlay network, the second receiving sub-module first receives the inter-node network performances from the network measuring unit, and then sends the inter-node network performances to an access measuring unit in the measuring overlay network, so that the access measuring unit calculates the inter-node network performances between the source network nodes and the target network nodes; alternatively, the second sending sub-module sends the inter-node network performances between the source network nodes and the target network nodes obtained by the calculating sub-module to the access measuring unit in the measuring overlay network.

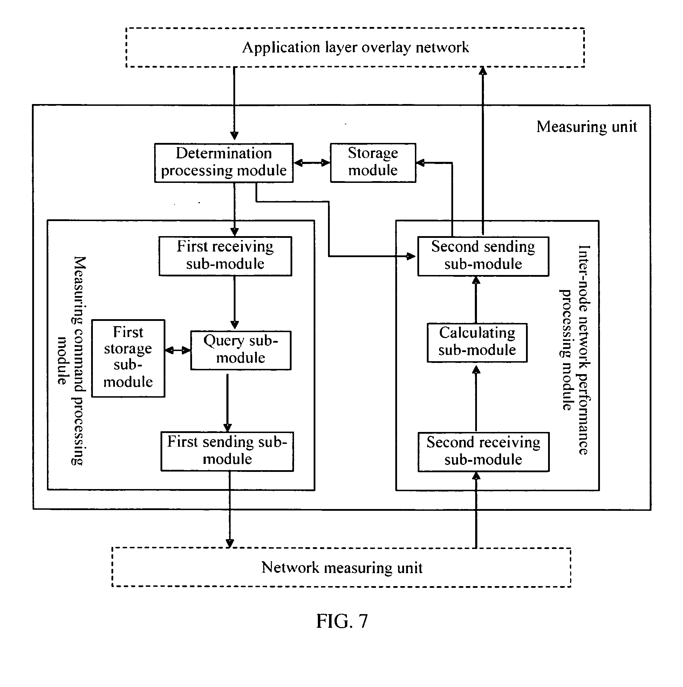

Further, referring to FIG. 7, the measuring unit may also include a storage module and a determination processing module.

The storage module is adapted to store non-real-time inter-node network performances between the source network nodes and the target network nodes.

The determination processing module is adapted to receive the measuring command of inter-node network performance sent by the application layer overlay network, and determine whether the measuring command of inter-node network performance is a real-time or non-real-time measuring command.

If the measuring command of inter-node network performance is a real-time measuring command, the determination processing module forwards the measuring command of inter-node network performance sent by the application layer overlay network to the measuring command processing module.

If the measuring command of inter-node network performance is a non-real-time measuring command, the determination processing module queries the storage module to determine whether any inter-node network performances between the source network nodes and the target network nodes that need to be queried are stored therein; and if yes, the determination processing module reads the inter-node network performances between the source network nodes and the target network nodes from the storage module, and sends inter-node the network performances to the second sending sub-module; otherwise, the determination processing module forwards the measuring command of inter-node network performance sent by the application layer overlay network to the measuring command processing module, and informs the second sending sub-module to forward the inter-node network performances between the source network nodes and the target network nodes to the application layer overlay network and the storage module.

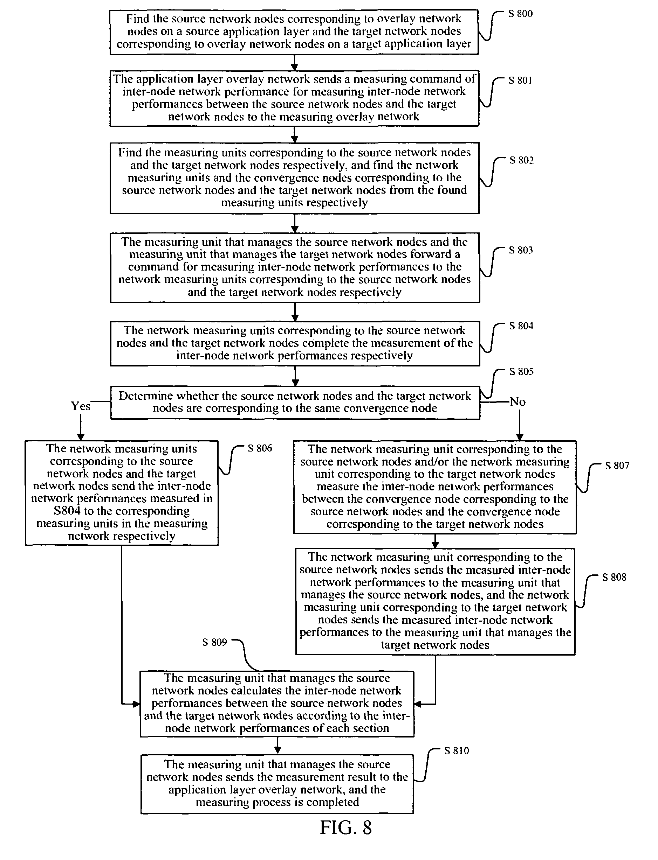

FIG. 8 is a flow chart of the signaling of a method for measuring inter-node network performances in an overlay network according to an embodiment of the disclosure. The method of this embodiment includes the following steps:

In S800, the source network nodes corresponding to overlay network nodes on a source application layer and the target network nodes corresponding to overlay network nodes on a target application layer are searched for.

In S801, the application layer overlay network sends a measuring command of inter-node network performance for measuring inter-node network performances between the source network nodes and the target network nodes to the measuring overlay network.

Here, the performances may be non-real-time parameters such as physical distances between the network nodes, or real-time parameters such as transmission delays and available bandwidths. The network nodes are taken as an example for illustration herein, but it should be noted that, the network nodes may be network terminals, or other network equipments or systems connected to the application layer overlay network. The measuring command of inter-node network performance is transmitted to a measuring network through interfaces between the application layer overlay network and the measuring network. The measuring network may be a network in an overlay structure or in other structures. However, in the network of an overlay structure, each measuring unit only needs to store corresponding relations between the network measuring units, the convergence nodes, and the network nodes adjacent to the measuring unit, so that the measuring unit providing services can be searched out conveniently.

In S802, after receiving the measuring command of inter-node network performance from the application layer overlay network, the measuring overlay network searches for the measuring units that manage the source network nodes and the target network nodes respectively, and respectively searches for the network measuring units and the convergence nodes corresponding to the source network nodes and the target network nodes from the measuring units searched out.

In S803, the measuring unit that manages the source network nodes forwards a command for measuring inter-node network performances between the source network nodes and the corresponding convergence node to the network measuring unit corresponding to the source network nodes.

The measuring unit that manages the target network nodes sends a command for measuring inter-node network performances between the target network nodes and the corresponding convergence node to the network measuring unit corresponding to the target network nodes.

The source network nodes and the target network nodes may physically access the network layer through the same convergence node or different convergence nodes. When the network nodes access the network layer through different convergence nodes, the two convergence nodes may correspond to the same network measuring unit or correspond to different network measuring units. When sending the measuring command of inter-node network performance, the measuring unit may send the command to the corresponding network measuring unit according to the corresponding relations between the network nodes, the convergence node, and the network measuring unit, so as to require the network measuring unit to measure the inter-node network performances between the network nodes and the convergence nodes as well as the inter-node network performances between the two convergence nodes (which is applicable only when the source network nodes and the target network nodes correspond to different convergence nodes).

In S804, the network measuring unit corresponding to the source network nodes completes the measurement of the inter-node network performances between the source network nodes and the corresponding convergence node according to the measuring command of inter-node network performance sent by the measuring unit that manages the source network nodes.

The network measuring unit corresponding to the target network nodes completes the measurement of the inter-node network performances between the target network nodes and the corresponding convergence node according to the measuring command of inter-node network performance sent by the measuring unit that manages the target network nodes.

In 805, it is determined whether the source network nodes and the target network nodes correspond to the same convergence node, and if yes, S806 is performed; otherwise, S807 is performed.

In S806, the network measuring units corresponding to the source network nodes and the target network nodes send the inter-node network performances measured in S804 to the corresponding measuring units in the measuring network respectively; then, S809 is performed.

In S807, the network measuring unit corresponding to the source network nodes and/or the network measuring unit corresponding to the target network nodes measure inter-node network performances between the convergence node corresponding to the source network nodes and the convergence node corresponding to the target network nodes; then, S808 is performed. No matter which selection policy is adopted or which network measuring unit is selected for performing the measurement, the measurement shall fall within the protective scope of the embodiments of the disclosure.

In S808, the network measuring unit corresponding to the source network nodes sends its measured inter-node network performances to the measuring unit that manages the source network nodes, and the network measuring unit corresponding to the target network nodes sends its measured inter-node network performances to the measuring unit that manages the target network nodes. In this embodiment, for example, the measuring unit that manages the source network nodes is an access measuring unit in the measuring overlay network; therefore, the measuring unit that manages the target network nodes still needs to forward the obtained inter-node network performances to the measuring unit that manages the source network nodes.

In S809, the measuring unit that manages the source network nodes calculates the inter-node network performances between the source network nodes and the target network nodes according to the inter-node network performances of each section.

Certainly, persons of ordinary skills in the art should understand that, the access measuring unit in the measuring overlay network may be the measuring unit that manages the target network nodes or other measuring units, and the measuring process is similar to this embodiment, which will not be described here again.

In S804 and S809, non-real-time inter-node network performances may also be stored, and the difference lies in that, in S804, the network measuring unit stores non-real-time inter-node network performances between the source (target) network nodes and the corresponding convergence node or non-real-time inter-node network performances between different convergence nodes, while in S809, the measuring unit stores non-real-time inter-node network performances between the source network nodes and the target network nodes.

In S810, the measuring unit that manages the source network nodes sends the measurement result obtained in S809 to the application layer overlay network, and thus the measuring process is completed.

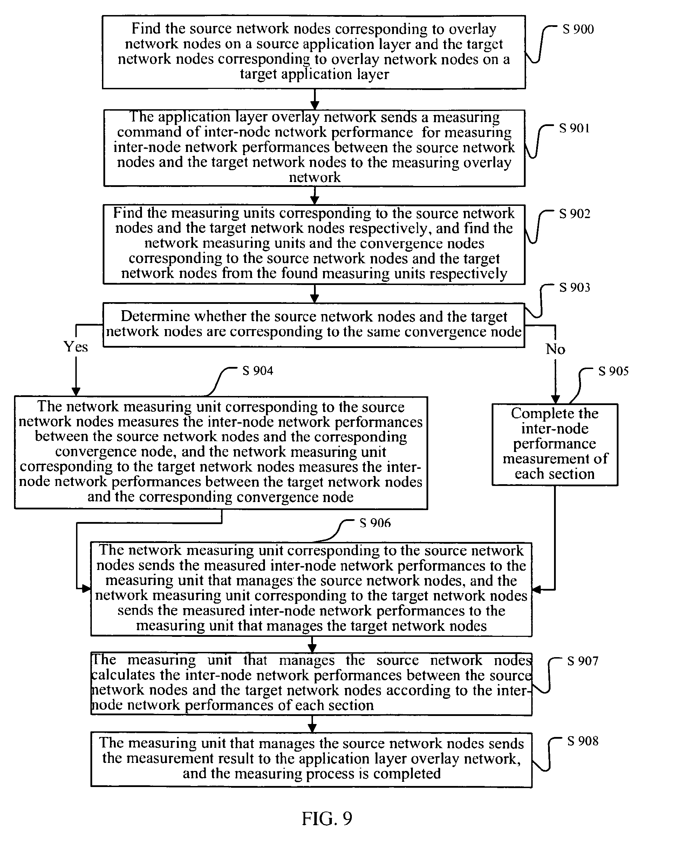

Only an embodiment of the method of the disclosure is described above. In practice, whether the source network nodes and the target network nodes correspond to the same convergence node may also be determined first. FIG. 9 is a flow chart of the signaling of another method for measuring inter-node network performances in an overlay network according to an embodiment of the disclosure.

In S900, the source network nodes corresponding to overlay network nodes on a source application layer and the target network nodes corresponding to overlay network nodes on a target application layer are searched for.

In S901, the application layer overlay network sends a measuring command of inter-node network performance for measuring inter-node network performances between the source network nodes and the target network nodes to the measuring overlay network.

Here, the performances may be non-real-time parameters such as physical distances between the network nodes, or real-time parameters such as transmission delays and available bandwidths. The network nodes are taken as an example for illustration herein, but it should be noted that, the network nodes may be network terminals, or other network equipments or systems connected to the application layer overlay network. The measuring command of inter-node network performance is transmitted to a measuring network through interfaces between the application layer overlay network and the measuring network. The measuring network may be a network in an overlay structure or in other structures. However, in the network of an overlay structure, each measuring unit only needs to store corresponding relations between the network measuring units, the convergence nodes, and the network nodes adjacent to the measuring unit, so that the measuring unit providing services can be searched out conveniently.

In S902, after receiving the measuring command of inter-node network performance from the application layer overlay network, the measuring overlay network searches for the measuring units that manage the source network nodes and the target network nodes respectively, and respectively searches for the network measuring units and the convergence nodes corresponding to the source network nodes and the target network nodes from the measuring units searched out.

In S903, it is determined whether the source network nodes and the target network nodes correspond to the same convergence node, and if yes, S904 is performed; otherwise, S905 is performed.

In S904, the network measuring unit corresponding to the source network nodes completes the measurement of the inter-node network performances between the source network nodes and the corresponding convergence node according to the measuring command of inter-node network performance sent by the measuring unit that manages the source network nodes.

The network measuring unit corresponding to the target network nodes completes the measurement of the inter-node network performances between the target network nodes and the corresponding convergence node according to the measuring command of inter-node network performance sent by the measuring unit that manages the target network nodes; then, S906 is performed.

In S905, the network measuring unit corresponding to the source network nodes completes the measurement of the inter-node network performances between the source network nodes and the corresponding convergence node according to the measuring command of inter-node network performance sent by the measuring unit that manages the source network nodes.

The network measuring unit corresponding to the target network nodes completes the measurement of the inter-node network performances between the target network nodes and the corresponding convergence node according to the measuring command of inter-node network performance sent by the measuring unit that manages the target network nodes.

The network measuring unit corresponding to the source network nodes and/or the network measuring unit corresponding to the target network nodes measure inter-node network performances between the convergence node corresponding to the source network nodes and the convergence node corresponding to the target network nodes; then, S906 is performed.

In S906, the network measuring unit corresponding to the source network nodes sends its measured inter-node network performances to the measuring unit that manages the source network nodes, and the network measuring unit corresponding to the target network nodes sends its measured inter-node network performances to the measuring unit that manages the target network nodes; similarly, in this embodiment, for example, the measuring unit that manages the source network nodes is an access measuring unit in the measuring overlay network; therefore, the measuring unit that manages the target network nodes still needs to forward the obtained inter-node network performances to the measuring unit that manages the source network nodes.

In S907, the measuring unit that manages the source network nodes calculates the inter-node network performances between the source network nodes and the target network nodes according to the inter-node network performances of each section.

Certainly, persons of ordinary skills in the art should understand that, the access measuring unit in the measuring overlay network may be the measuring unit that manages the target network nodes or other measuring units, and the measuring process is similar to this embodiment, which will not be described here again.

In S908, the measuring unit that manages the source network nodes sends the measurement result obtained in S907 to the application layer overlay network, and thus the measuring process is completed.

In S904, S905, and S907, non-real-time inter-node network performances may also be stored, and the difference lies in that, in S904 and S905, the network measuring unit stores non-real-time inter-node network performances between the source (target) network nodes and the corresponding convergence node or non-real-time inter-node network performances between different convergence nodes, while in S907, the measuring unit stores non-real-time inter-node network performances between the source network nodes and the target network nodes.

The aforementioned method for measuring inter-node network performances in an overlay network is applicable to various circumstances. For example, the method may be adapted to construct multicast trees for an application layer overlay network. During the construction of the multicast tree for an application layer overlay network, the delays between the network nodes should be as short as possible, so as to reduce the delay from each leaf node to the root node. First, the delay from each network node to a current network node (for example, Node A) is measured, and network nodes with the shortest delay (for example, Nodes B and C) are selected, so that the nodes B, C choose A as their parent node. It is assumed that A is under a full load at this time, so the delays of the remaining network nodes (for example, D, E, F) and B, C are measured. It is assumed that the delays between D, E, and B are short, so B is chosen as their parent node. If the delays between F and C are short, C is chosen as the parent node. In this manner, an efficient application layer overlay network multicast tree is constructed.

Moreover, this method is also applicable to a P2P file system. For example, in a P2P network, a certain network node needs to download files from the P2P network, and it is found that three different network nodes can provide fragments of the same content. At this point, the optimal network node needs to be selected for providing the services. The above measuring method may be employed to measure the performances (for example, distances, bandwidths, and node processing capabilities) between the network node that needs to download files and the other three network nodes capable of providing the same content, so as to select the optimal network node to serve the network node that needs to download files.

By implementing the above embodiments of the disclosure, inter-node network performances between overlay nodes on an application layer can be accurately measured, and the disclosure may also be integrated with the existing network equipment, so as to reduce the measuring cost and bandwidth consumption.

It will be apparent to those skilled in the art that various modifications and variations can be made to the disclosure without departing from the scope of the invention. In view of the foregoing, the disclosure is intended to cover modifications and variations of this invention provided they fall within the scope of the following claims and their equivalents.

## Claims

1. A method for measuring inter-node network performances in an overlay network, the overlay network being a network topology structure operating on an application layer, which implements specific services by constructing a network topology between nodes on the application layer, comprising:
receiving, by one or more measuring units running application layer protocol, a measuring command of inter-node network performance sent by the application layer overlay network;
respectively searching for network measuring units and convergence nodes corresponding to source network nodes and target network nodes, wherein the network measuring units and convergence nodes run network layer protocol;
determining whether the source network nodes and the target network nodes correspond to the same convergence node;
if the source network nodes and the target network nodes correspond to the same convergence node, measuring, by the network measuring unit corresponding to the source network nodes, inter-node network performances between the source network nodes and the convergence node corresponding to the source network nodes to obtain a first inter-node network performance; and measuring, by the network measuring unit corresponding to the target network nodes, inter-node network performances between the target network nodes and the convergence node corresponding to the target network nodes to obtain a second inter-node network performance;
calculating, by the measuring units, inter-node network performances between the source network nodes and the target network nodes according to the first inter-node network performance and the second inter-node network performance;
if the source network nodes and the target network nodes correspond to different convergence nodes, measuring, by the network measuring unit corresponding to the source network nodes, inter-node network performances between the source network nodes and the convergence node corresponding to the source network nodes to obtain a third inter-node network performance; measuring, by the network measuring unit corresponding to the target network nodes, inter-node network performances between the target network nodes and the convergence node corresponding to the target network nodes to obtain a fourth inter-node network performance; and measuring, by the network measuring unit corresponding to the source network nodes and/or the network measuring unit corresponding to the target network nodes, inter-node network performances between the convergence node corresponding to the source network nodes and the convergence node corresponding to the target network nodes to obtain a fifth inter-node network performance; and
calculating, by the measuring units, inter-node network performances between the source network nodes and the target network nodes according to the third inter-node network performance, the fourth inter-node network performance and the fifth inter-node network performance.

2. The method according to claim 1, wherein the process of the respectively searching for the network measuring units and the convergence nodes corresponding to the source network nodes and the target network nodes comprises:
respectively searching for the measuring units that manage the source network nodes and the target network nodes;
searching for, by the measuring unit that manages the source network nodes, corresponding relations stored therein to obtain the network measuring unit and the convergence node corresponding to the source network nodes; and
searching for, by the measuring unit that manages the target network nodes, corresponding relations stored therein to obtain the network measuring unit and the convergence node corresponding to the target network nodes,
wherein the corresponding relations are relations between the network nodes, the convergence nodes, the network measuring units and the measuring units, or relations between the network nodes, the network measuring units and the measuring units.

3. The method according to claim 2, wherein
the inter-node network performances are non-real-time inter-node network performances;
the network measuring unit corresponding to the source network nodes stores the first inter-node network performance; and the network measuring unit corresponding to the target network nodes stores the second inter-node network performance; or the network measuring unit corresponding to the source network nodes stores the third inter-node network performance; the network measuring unit corresponding to the target network nodes stores the fourth inter-node network performance; and the network measuring unit corresponding to the source network nodes or the network measuring unit corresponding to the target network nodes stores the fifth inter-node network performance; and
the measuring units store the inter-node network performances between the source network nodes and the target network nodes.

4. The method according to claim 2, wherein
before respectively searches for the measuring units that manage the source network nodes and the target network nodes, the method further comprises:
searching for the source network nodes corresponding to overlay network nodes on a source application layer and the target network nodes corresponding to overlay network nodes on a target application layer; and
after calculating, by the measuring units, the inter-node network performances between the source network nodes and the target network nodes, the method further comprises:
sending the measured inter-node network performances between the source network nodes and the target network nodes to an application layer overlay network.

5. The method according to any one of claims 1 to 4, wherein the inter-node network performances comprise distances, delays and bandwidths between the nodes.

6. A network measuring unit running network layer protocol, comprising a receiving module, a measuring module, and a forwarding module, wherein
the receiving module is adapted to receive a measuring command of inter-node network performancesent by a measuring unit running application layer protocol and measuring inter-node network performance in an overlay network, and forward the measuring command of inter-node network performance to the measuring module; and
the measuring module is adapted to receive the measuring command of inter-node network performance forwarded by the receiving module, measure inter-node network performances between network nodes and a convergence node, and send the inter-node network performances to the forwarding module it said network nodes corresponding to the same convergence node; or measure inter-node network performances between network nodes and a convergence node and inter-node network performances between different convergence nodes according to the measuring command of inter-node network performance forwarded by the receiving module, and send the inter-node network performances to the forwarding module it said network nodes correspond to different convergence nodes;
the forwarding module is adapted to forward the inter-node network performances to the measuring unit, wherein the overlay network is a network topology structure operating on an application layer, which implements specific services by constructing a network topology between nodes on the application layer,.

7. The network measuring unit according to claim 6, wherein
the measuring module comprises: a determining sub-module, a processing sub-module and a storage sub-module, wherein
the determining sub-module is adapted to determine whether the measuring command of inter-node network performance sent by the receiving module is a measuring command of real-time inter-node network performance or a measuring command of non-real-time inter-node network performance, and feed back a determination result to the processing sub-module;
the processing sub-module is adapted to perform a process according to the determination result from the determining sub-module; if the measuring command of inter-node network performance is the measuring command of real-time inter-node network performance, execute the measuring command of inter-node network performance, directly send the measured inter-node network performances to the forwarding module; and if the measuring command of inter-node network performance is the measuring command of non-real-time inter-node network performance, query the storage sub-module to determine whether any inter-node network performances that need to be queried are stored therein; and if the inter-node network performances that need to be queried are stored, read the inter-node network performances from the storage sub-module and send the inter-node network performances to the forwarding module, otherwise, execute the measuring command of inter-node network performance and send the measured inter-node network performances to the storage sub-module and the forwarding module; and
the storage sub-module is adapted to store the non-real-time inter-node network performances sent by the processing sub-module.

8. A measuring unit running application layer protocol, configured in a measuring overlay network, wherein the overlay network is a network topology structure operating on an application layer, which implements specific services by constructing a network topology between nodes on the application layer, the unit comprising a measuring command processing module and an inter-node network performance processing module, wherein
the measuring command processing module is adapted to receive a measuring command of inter-node network performance sent by an application layer overlay network, and send the measuring command of inter-node network performance to a network measuring unit corresponding to source network nodes and a network measuring unit corresponding to target network nodes; and
the inter-node network performance processing module is adapted to receive inter-node network performances sent by the network measuring units, process the inter-node network performances to obtain inter-node network performances between the source network nodes and the target network nodes, and send the inter-node network performances between the source network nodes and the target network nodes to the application layer overlay network, wherein the inter-node network performace is measured between network nodes and or convergence node it said network nodes correspond to the same convergence node or between different nodes and a convergence node and between different convergence nodes it said network nodes correspond to different convergence nodes.

9. The measuring unit according to claim 8, wherein the measuring command processing module comprises a first receiving sub-module, a first storage sub-module, a query sub-module and a first sending sub-module:
the first storage sub-module is adapted to store corresponding relations between the network nodes, convergence nodes, the network measuring units and the measuring units in network deployment;
the query sub-module is adapted to respectively searches for the network measuring units, the convergence nodes and the measuring units corresponding to the source network nodes and the target network nodes from the corresponding relations stored in the first storage sub-module according to the measuring command of inter-node network performance sent by the first receiving sub-module; and
the first sending sub-module is adapted to respectively send the measuring command of inter-node network performance to the network measuring units corresponding to the source network nodes and the target network nodes queried by the query sub-module;
and the inter-node network performance processing module comprises a second receiving sub-module, a calculating sub-module and a second sending sub-module:
the second receiving sub-module is adapted to receive the inter-node network performances sent by the network measuring units, wherein the inter-node network performances comprise network performances between the network nodes and the convergence nodes, or the inter-node network performances comprise network performances between the network nodes and the convergence nodes, and network performances between the different convergence nodes;
the calculating sub-module is adapted to calculate the inter-node network performances between the source network nodes and the target network nodes according to the inter-node network performances received by the second receiving module, and send the calculated inter-node network performances to the second sending sub-module; and
the second sending sub-module is adapted to receive the inter-node network performances between the source network nodes and the target network nodes, and forward the inter-node network performances between the source network nodes and the target network nodes to the application layer overlay network.

10. The measuring unit according to claim 9, further comprising: a storage module and a determination processing module, wherein
the storage module is adapted to store non-real-time network performances between the source network nodes and the target network nodes;
the determination processing module is adapted to receive the measuring command of inter-node network performance sent by the application layer overlay network, and determine whether the measuring command of inter-node network performance is a measuring command of real-time inter-node network performance or a measuring command of non-real-time inter-node network performance;
if the measuring command of inter-node network performance is the measuring command of real-time inter-node network performance, the determination processing module forwards the measuring command of inter-node network performance sent by the application layer overlay network to the measuring command processing module; and
if the measuring command of inter-node network performance is the measuring command of non-real-time inter-node network performance, the determination processing module queries the storage module to determine whether the network performances between the source network nodes and the target network nodes that need to be queried are stored therein; and if the network performances between the source network nodes and the target network nodes that need to be queried are stored, the determination processing module reads the network performances between the source network nodes and the target network nodes from the storage module and sends the network performances to the second sending sub-module; otherwise, the determination processing module forwards the measuring command of inter-node network performance sent by the application layer overlay network to the measuring command processing module, and notifies the second sending sub-module to forward the inter-node network performances between the source network nodes and the target network nodes to the storage module.

11. The measuring unit according to claim 9 or 10, wherein if the measuring unit is an access measuring unit in the measuring overlay network, the second receiving sub-module is further adapted to receive inter-node network performances sent by other measuring units, and send the inter-node network performances sent by the network measuring units and the other measuring units to the calculating sub-module;
wherein if the measuring unit is not an access measuring unit in the measuring overlay network, the second receiving sub-module is further adapted to send the inter-node network performances sent by the network measuring units to the access measuring unit in the measuring overlay network; and the second sending sub-module is further adapted to forward the inter-node network performances between the source network nodes and the target network nodes obtained by the calculating sub-module to the access measuring unit in the measuring overlay network

12. A system for measuring inter-node network performances in an overlay network, wherein the overlay network is a network topology structure operating on an application layer, which implements specific services by constructing a network topology between nodes on the application layer, comprising network nodes in an application layer overlay network, wherein the system further comprises convergence nodes, network measuring units running network layer protocol and at least one measuring unit running application layer protocol, and the network nodes access the network layer through the convergence nodes;
the measuring unit is adapted to receive a measuring command of inter-node network performance sent by the application layer overlay network, and send the measuring command of inter-node network performance to the network measuring unit corresponding to source network nodes and the network measuring unit corresponding to target network nodes, wherein the measuring command of inter-node network performance carries convergence node information corresponding to the network measuring units; the measuring unit is further adapted to receive inter-node network performances sent by the network measuring units or other measuring units, process the inter-node network performances to obtain inter-node network performances between the source network nodes and the target network nodes, and send the inter-node network performances between the source network nodes and the target network nodes to the application layer overlay network; and
the network measuring units are adapted to receive the measuring command of inter-node network performance forwarded by the measuring unit, and to measure inter-node network performances between the convergence nodes and the network nodes it said network nodes correspond to the same convergence node, or measure inter-node network performances between the convergence nodes and the network nodes, and inter-node network performances between the different convergence nodes, it said network nodes correspond to different convergence nodes.

13. The system according to claim 12, wherein
the measuring unit is further adapted to store corresponding relations among the measuring unit, the network nodes, the convergence nodes and the network measuring units or corresponding relations among the measuring unit, the network nodes and the network measuring units; and after receiving the measuring command of inter-node network performance sent by the network nodes in the application layer overlay network, searches for the network measuring units and the convergence nodes corresponding to the source network nodes and the target network nodes, and forward the measuring command of inter-node network performance to the network measuring units searched out.

14. The system according to claim 12, wherein
the measuring unit is further adapted to determine whether the convergence node corresponding to the source network nodes and the convergence node corresponding to the target network nodes are the same; and
wherein the network measuring units and the convergence nodes are configured in the network layer.

## Patentansprüche

1. Verfahren zum Messen von Zwischenknoten-Netzwerkleistungen in einem überlagerten Netzwerk, wobei das überlagerte Netzwerk eine Netzwerktopologiestruktur ist, die auf einer Anwendungsschicht, die spezifische Dienste durch Konstruieren einer Netzwerktopologie zwischen Knoten auf der Anwendungsschicht implementiert, operiert, umfassend:
Empfangen, durch eine oder mehrere Messungseinheiten, die ein Anwendungsschichtprotokoll ausführen, eines Befehls zur Messung der Zwischenknoten-Netzwerkleistung, gesandt von dem überlagerten Netzwerk der Anwendungsschicht;
jeweiliges Suchen nach Netzwerk-Messungseinheiten und Konvergenzknoten, die mit Quellennetzwerkknoten und Zielnetzwerkknoten korrespondieren, wobei die Netzwerk-Messungseinheiten und Konvergenzknoten das Netzwerkschichtprotokoll ausführen;
Bestimmen, ob die Quellennetzwerkknoten und die Zielnetzwerkknoten mit dem gleichen Konvergenzknoten korrespondieren;
wenn die Quellennetzwerkknoten und die Zielnetzwerkknoten mit dem gleichen Konvergenzknoten korrespondieren, Messen, durch die Netzwerkmessungseinheit, die mit den Quellennetzwerkknoten korrespondiert, von Zwischenknoten-Netzwerkleistungen zwischen den Quellennetzwerkknoten und dem Konvergenzknoten, der mit den Quellennetzwerkknoten korrespondiert, um eine erste Zwischenknoten-Netzwerkleistung zu erhalten; und Messen, durch die Netzwerkmessungseinheit, die mit den Zielnetzwerkknoten korrespondiert, von Zwischenknoten-Netzwerkleistungen zwischen den Zielnetzwerkknoten und dem Konvergenzknoten, der mit den Zielnetzwerkknoten korrespondiert, um eine zweite Zwischenknoten-Netzwerkleistung zu erhalten;
Berechnen, durch die Messungseinheiten, von Zwischenknoten-Netzwerkleistungen zwischen den Quellennetzwerkknoten und den Zielnetzwerkknoten gemäß der ersten Zwischenknoten-Netzwerkleistung und der zweiten Zwischenknoten-Netzwerkleistung;
wenn die Quellennetzwerkknoten und die Zielnetzwerkknoten mit verschiedenen Konvergenzknoten korrespondieren, Messen, durch die Netzwerkmessungseinheit, die mit den Quellennetzwerkknoten korrespondiert, von Zwischenknoten-Netzwerkleistungen zwischen den Quellennetzwerkknoten und dem Konvergenzknoten, der mit den Quellennetzwerkknoten korrespondiert, um eine dritte Zwischenknoten-Netzwerkleistung zu erhalten; und Messen, durch die Netzwerkmessungseinheit, die mit den Zielnetzwerkknoten korrespondiert, von Zwischenknoten-Netzwerkleistungen zwischen den Zielnetzwerkknoten und dem Konvergenzknoten, der mit den Zielnetzwerkknoten korrespondiert, um eine vierte Zwischenknoten-Netzwerkleistung zu erhalten; und Messen, durch die Netzwerkmessungseinheit, die mit den Quellennetzwerkknoten korrespondiert, und/oder die Netzwerkmessungseinheit, die mit den Zielnetzwerkknoten korrespondiert, von Zwischenknoten-Netzwerkleistungen zwischen dem Konvergenzknoten, der mit den Quellennetzwerkknoten korrespondiert, und dem Konvergenzknoten, der mit den Zielnetzwerkknoten korrespondiert, um eine fünfte Zwischenknoten-Netzwerkleistung zu erhalten; und
Berechnen, durch die Messungseinheiten, von Zwischenknoten-Netzwerkleistungen zwischen den Quellennetzwerkknoten und den Zielnetzwerkknoten gemäß der dritten Zwischenknoten-Netzwerkleistung, der vierten Zwischenknoten-Netzwerkleistung und der fünften Zwischenknoten-Netzwerkleistung.

2. Verfahren nach Anspruch 1, wobei der Prozess des jeweiligen Suchens nach den Netzwerkmessungseinheiten und den Konvergenzknoten, die mit den Quellennetzwerkknoten und den Zielnetzwerkknoten korrespondieren, Folgendes umfasst:
jeweiliges Suchen nach den Messungseinheiten, die die Quellennetzwerkknoten und die Zielnetzwerkknoten verwalten;
Suchen, durch die Messungseinheit, die die Quellennetzwerkknoten verwaltet, nach darin gespeicherten korrespondierenden Beziehungen, um die Netzwerkmessungseinheit und den Konvergenzknoten, die mit den Quellennetzwerkknoten korrespondieren, zu erhalten; und
Suchen, durch die Messungseinheit, die die Zielnetzwerkknoten verwaltet, nach darin gespeicherten korrespondierenden Beziehungen, um die Netzwerkmessungseinheit und den Konvergenzknoten, die mit den Zielnetzwerkknoten korrespondieren, zu erhalten,
wobei die korrespondierenden Beziehungen Beziehungen zwischen den Netzwerkknoten, den Konvergenzknoten, den Netzwerkmessungseinheiten und den Messungseinheiten oder Beziehungen zwischen den Netzwerkknoten, den Netzwerkmessungseinheiten und den Messungseinheiten sind.

3. Verfahren nach Anspruch 2, wobei
die Zwischenknoten-Netzwerkleistungen Nichtechtzeit-Zwischenknoten-Netzwerkleistungen sind;
die Netzwerkmessungseinheit, die mit den Quellennetzwerkknoten korrespondiert, die erste Zwischenknoten-Netzwerkleistung speichert; und die Netzwerkmessungseinheit, die mit den Zielnetzwerkknoten korrespondiert, die zweite Zwischenknoten-Netzwerkleistung speichert; oder die Netzwerkmessungseinheit, die mit den Quellennetzwerkknoten korrespondiert, die dritte Zwischenknoten-Netzwerkleistung speichert; die Netzwerkmessungseinheit, die mit den Zielnetzwerkknoten korrespondiert, die vierte Zwischenknoten-Netzwerkleistung speichert; und die Netzwerkmessungseinheit, die mit den Quellennetzwerkknoten korrespondiert, oder die Netzwerkmessungseinheit, die mit den Zielnetzwerkknoten korrespondiert, die fünfte Zwischenknoten-Netzwerkleistung speichert; und
die Messungseinheiten die Zwischenknoten-Netzwerkleistungen zwischen den Quellennetzwerkknoten und den Zielnetzwerkknoten speichern.

4. Verfahren nach Anspruch 2, wobei
das Verfahren vor jeweiligen Suchen nach den Messungseinheiten, die die Quellennetzwerkknoten und die Zielnetzwerkknoten verwalten, ferner Folgendes umfasst:
Suchen nach den Quellennetzwerkknoten, die mit Knoten des überlagerten Netzwerks auf einer Quellenanwendungsschicht korrespondieren, und den Zielnetzwerkknoten, die mit Knoten des überlagerten Netzwerks auf einer Zielanwendungsschicht korrespondieren; und
das Verfahren nach dem Berechnen, durch die Messungseinheiten, der Zwischenknoten-Netzwerkleistungen zwischen den Quellennetzwerkknoten und den Zielnetzwerkknoten ferner Folgendes umfasst:
Senden der gemessenen Zwischenknoten-Netzwerkleistungen zwischen den Quellennetzwerkknoten und den Zielnetzwerkknoten an ein überlagertes Netzwerk der Anwendungsschicht.

5. Verfahren nach einem der Ansprüche 1 bis 4, wobei die Zwischenknoten-Netzwerkleistungen Distanzen, Verzögerungen und Bandbreiten zwischen den Knoten umfassen.

6. Netzwerkmessungseinheit, die das Netzwerkschichtprotokoll ausführt, umfassend ein Empfangsmodul, ein Messungsmodul und ein Weiterleitungsmodul, wobei
das Empfangsmodul angepasst ist zum Empfangen eines Befehls zur Messung der Zwischenknoten-Netzwerkleistung, gesandt von einer Messungseinheit, die das Anwendungsschichtprotokoll ausführt, und Messen von Zwischenknoten-Netzwerkleistung in einem überlagerten Netzwerk, und Weiterleiten des Befehls zur Messung der Zwischenknoten-Netzwerkleistung an das Messungsmodul; und
das Messungsmodul angepasst ist zum Empfangen des von dem Empfangsmodul weitergeleiteten Befehls zur Messung der Zwischenknoten-Netzwerkleistung, Messen von Zwischenknoten-Netzwerkleistungen zwischen Netzwerkknoten und einem Konvergenzknoten und Senden der Zwischenknoten-Netzwerkleistungen an das Weiterleitungsmodul, wenn die Netzwerkknoten mit dem gleichen Konvergenzknoten korrespondieren; oder Messen von Zwischenknoten-Netzwerkleistungen zwischen Netzwerkknoten und einem Konvergenzknoten und Zwischenknoten-Netzwerkleistungen zwischen verschiedenen Konvergenzknoten gemäß dem von dem Empfangsmodul weitergeleiteten Befehl zur Messung der Zwischenknoten-Netzwerkleistungen und Senden der Zwischenknoten-Netzwerkleistungen an das Weiterleitungsmodul, wenn die Netzwerkknoten mit verschiedenen Konvergenzknoten korrespondieren;
das Weiterleitungsmodul angepasst ist zum Weiterleiten der Zwischenknoten-Netzwerkleistungen an die Messungseinheit, wobei das überlagerte Netzwerk eine Netzwerktopologiestruktur ist, die auf einer Anwendungsschicht, die spezifische Dienste durch Konstruieren einer Netzwerktopologie zwischen Knoten auf der Anwendungsschicht implementiert, operiert.

7. Netzwerkmessungseinheit nach Anspruch 6, wobei
das Messungsmodul Folgendes umfasst: ein Bestimmungsuntermodul, ein Verarbeitungsuntermodul und ein Speicherungsuntermodul, wobei das Bestimmungsuntermodul angepasst ist zum Bestimmen, ob der von dem Empfangsmodul gesandte Befehl zur Messung der Zwischenknoten-Netzwerkleistung ein Befehl zur Messung der Echtzeit-Zwischenknoten-Netzwerkleistung oder ein Befehl zur Messung der Nichtechtzeit-Zwischenknoten-Netzwerkleistung ist, und Zurückmelden eines Bestimmungsergebnisses an das Verarbeitungsuntermodul;
das Verarbeitungsuntermodul angepasst ist zum Durchführen eines Prozesses gemäß dem Bestimmungsergebnis von dem Bestimmungsuntermodul; wenn der Befehl zur Messung der Zwischenknoten-Netzwerkleistung der Befehl zur Messung der Echtzeit-Zwischenknoten-Netzwerkleistung ist, Ausführen des Befehls zur Messung der Zwischenknoten-Netzwerkleistung, direkten Senden der gemessenen Zwischenknoten-Netzwerkleistungen an das Weiterleitungsmodul; und wenn der Befehl zur Messung der Zwischenknoten-Netzwerkleistung der Befehl zur Messung der Nichtechtzeit-Zwischenknoten-Netzwerkleistung ist, Abfragen des Speicherungsuntermoduls, um zu bestimmen, ob irgendwelche Zwischenknoten-Netzwerkleistungen, die abgefragt werden müssen, darin gespeichert sind; und wenn die Zwischenknoten-Netzwerkleistungen, die abgefragt werden müssen, gespeichert sind, Lesen der Zwischenknoten-Netzwerkleistungen aus dem Speicherungsuntermodul und Senden der Zwischenknoten-Netzwerkleistungen an das Weiterleitungsmodul, anderenfalls Ausführen des Befehls zur Messung der Zwischenknoten-Netzwerkleistung und Senden der gemessenen Zwischenknoten-Netzwerkleistungen an das Speicherungsuntermodul und das Weiterleitungsmodul;
und
das Speicherungsuntermodul angepasst ist zum Speichern der von dem Verarbeitungsuntermodul gesandten Nichtechtzeit-Zwischenknoten-Netzwerkleistungen.

8. Messungseinheit, die das Anwendungsschichtprotokoll ausfiihrt, konfiguriert in einem überlagerten Messungsnetzwerk, wobei das überlagerte Netzwerk eine Netzwerktopologiestruktur ist, die auf einer Anwendungsschicht, die spezifische Dienste durch Konstruieren einer Netzwerktopologie zwischen Knoten auf der Anwendungsschicht implementiert, operiert, die Einheit ein Messungsbefehl-Verarbeitungsmodul und ein Zwischenknoten-Netzwerkleistungs-Verarbeitungsmodul umfasst, wobei
das Messungsbefehl-Verarbeitungsmodul angepasst ist zum Empfangen eines Befehls zur Messung der Zwischenknoten-Netzwerkleistung, gesandt von einem überlagerten Netzwerk der Anwendungsschicht, und Senden des Befehls zur Messung der Zwischenknoten-Netzwerkleistung an eine Netzwerkmessungseinheit, die mit Quellennetzwerkknoten korrespondiert, und eine Netzwerkmessungseinheit, die mit Zielnetzwerkknoten korrespondiert; und
das Zwischenknoten-Netzwerkleistungs-Verarbeitungsmodul angepasst ist zum Empfangen von Zwischenknoten-Netzwerkleistungen, gesandt von den Netzwerkmessungseinheiten, Verarbeiten der Zwischenknoten-Netzwerkleistungen, um Zwischenknoten-Netzwerkleistungen zwischen den Quellennetzwerkknoten und den Zielnetzwerkknoten zu erhalten, und Senden der Zwischenknoten-Netzwerkleistungen zwischen den Quellennetzwerkknoten und den Zielnetzwerkknoten an das überlagerte Netzwerk der Anwendungsschicht, wobei die Zwischenknoten-Netzwerkleistung zwischen Netzwerkknoten und einem Konvergenzknoten gemessen wird, wenn die Netzwerkknoten mit dem gleichen Konvergenzknoten korrespondieren, oder zwischen Netzwerkknoten und einem Konvergenzknoten und zwischen verschiedenen Konvergenzknoten, wenn die Netzwerkknoten mit verschiedenen Konvergenzknoten korrespondieren.

9. Messungseinheit nach Anspruch 8, wobei das Messungsbefehl-Verarbeitungsmodul ein erstes Empfangsuntermodul, ein erstes Speicherungsuntermodul, ein Abfrageuntermodul und ein erstes Sendeuntermodul umfasst;
das erste Speicherungsuntermodul angepasst ist zum Speichern korrespondierender Beziehungen zwischen den Netzwerkknoten, Konvergenzknoten, den Netzwerkmessungseinheiten und den Messungseinheiten in Netzwerkeinsatz;
das Abfrageuntermodul angepasst ist zum jeweiligen Suchen nach den Netzwerkmessungseinheiten, den Konvergenzknoten und den Messungseinheiten, die mit den Quellennetzwerkknoten und den Zielnetzwerkknoten korrespondieren, aus den in dem ersten Speicherungsuntermodul gespeicherten korrespondierenden Beziehungen gemäß dem von dem ersten Empfangsuntermodul gesandten Befehl zur Messung der Zwischenknoten-Netzwerkleistung; und
das erste Sendeuntermodul angepasst ist zum jeweiligen Senden des Befehls zur Messung der Zwischenknoten-Netzwerkleistung an die Netzwerkmessungseinheiten, die mit den von dem Abfrageuntermodul abgefragten Quellennetzwerkknoten und Zielnetzwerkknoten korrespondieren;
und das Zwischenknoten-Netzwerkleistungs-Verarbeitungsmodul ein zweites Empfangsuntermodul, ein Berechnungsuntermodul und ein zweites Sendeuntermodul umfasst;
das zweite Empfangsuntermodul angepasst ist zum Empfangen der von den Netzwerkmessungseinheiten gesandten Zwischenknoten-Netzwerkleistungen, wobei die Zwischenknoten-Netzwerkleistungen Netzwerkleistungen zwischen den Netzwerkknoten und den Konvergenzknoten umfassen oder die Zwischenknoten-Netzwerkleistungen Netzwerkleistungen zwischen den Netzwerkknoten und den Konvergenzknoten und Netzwerkleistungen zwischen den verschiedenen Konvergenzknoten umfassen;
das Berechnungsuntermodul angepasst ist zum Berechnen der Zwischenknoten-Netzwerkleistungen zwischen den Quellennetzwerkknoten und den Zielnetzwerkknoten gemäß den von dem zweiten Empfangsmodul empfangenen Zwischenknoten-Netzwerkleistungen und Senden der berechneten Zwischenknoten-Netzwerkleistungen an das zweite Sendeuntermodul; und
das zweite Sendeuntermodul angepasst ist zum Empfangen der Zwischenknoten-Netzwerkleistungen zwischen den Quellennetzwerkknoten und den Zielnetzwerkknoten und Weiterleiten der Zwischenknoten-Netzwerkleistungen zwischen den Quellennetzwerkknoten und den Zielnetzwerkknoten an das überlagerte Netzwerk der Anwendungsschicht.

10. Messungseinheit nach Anspruch 9, ferner umfassend: ein Speicherungsmodul und ein Bestimmungsverarbeitungsmodul, wobei
das Speicherungsmodul angepasst ist zum Speichern von Nichtechtzeit-Netzwerkleistungen zwischen den Quellennetzwerkknoten und den Zielnetzwerkknoten;
das Bestimmungsverarbeitungsmodul angepasst ist zum Empfangen des von dem überlagerten Netzwerk der Anwendungsschicht gesandten Befehls zur Messung der Zwischenknoten-Netzwerkleistung und Bestimmen, ob der Befehl zur Messung der Zwischenknoten-Netzwerkleistung ein Befehl zur Messung der Echtzeit-Zwischenknoten-Netzwerkleistung oder ein Befehl zur Messung der Nichtechtzeit-Zwischenknoten-Netzwerkleistung ist;
wenn der Befehl zur Messung der Zwischenknoten-Netzwerkleistung der Befehl zur Messung der Echtzeit-Zwischenknoten-Netzwerkleistung ist, leitet das Bestimmungsverarbeitungsmodul den von dem überlagerten Netzwerk der Anwendungsschicht gesandten Befehl zur Messung der Zwischenknoten-Netzwerkleistung an das Messungsbefehl-Verarbeitungsmodul weiter; und
wenn der Befehl zur Messung der Zwischenknoten-Netzwerkleistung der Befehl zur Messung der Nichtechtzeit-Zwischenknoten-Netzwerkleistung ist, fragt das Bestimmungsverarbeitungsmodul das Speicherungsmodul ab, um zu bestimmen, ob die Netzwerkleistungen zwischen den Quellennetzwerkknoten und den Zielnetzwerkknoten, die abgefragt werden müssen, darin gespeichert sind; und wenn die Netzwerkleistungen zwischen den Quellennetzwerkknoten und den Zielnetzwerkknoten, die abgefragt werden müssen, gespeichert sind, liest das Bestimmungsverarbeitungsmodul die Netzwerkleistungen zwischen den Quellennetzwerkknoten und den Zielnetzwerkknoten aus dem Speicherungsmodul und sendet die Netzwerkleistungen an das zweite Sendeuntermodul; anderenfalls leitet das Bestimmungsverarbeitungsmodul den von dem überlagerten Netzwerk der Anwendungsschicht gesandten Befehl zur Messung der Zwischenknoten-Netzwerkleistung an das Messungsbefehl-Verarbeitungsmodul weiter und benachrichtigt das zweite Sendeuntermodul, die Zwischenknoten-Netzwerkleistungen zwischen den Quellennetzwerkknoten und den Zielnetzwerkknoten an das Speicherungsmodul weiterzuleiten.

11. Messungseinheit nach Anspruch 9 oder 10, wobei, wenn die Messungseinheit eine Zugangsmessungseinheit in dem überlagerten Messungsnetzwerk ist, das zweite Empfangsuntermodul ferner angepasst ist zum Empfangen von Zwischenknoten-Netzwerkleistungen, gesandt von anderen Messungseinheiten, und Senden der von den Netzwerkmessungseinheiten und den anderen Messungseinheiten gesandten Zwischenknoten-Netzwerkleistungen an das Berechnungsuntermodul;
wobei, wenn die Messungseinheit keine Zugangsmessungseinheit in dem überlagerten Messungsnetzwerk ist, das zweite Empfangsuntermodul ferner angepasst ist zum Senden der von den Netzwerkmessungseinheiten gesandten Zwischenknoten-Netzwerkleistungen an die Zugangsmessungseinheit in dem überlagerten Messungsnetzwerk; und das zweite Sendeuntermodul ferner angepasst ist zum Weiterleiten der von dem Berechnungsuntermodul erhaltenen Zwischenknoten-Netzwerkleistungen zwischen den Quellennetzwerkknoten und den Zielnetzwerkknoten an die Zugangsmessungseinheit in dem überlagerten Messungsnetzwerk.

12. System zum Messen von Zwischenknoten-Netzwerkleistungen in einem überlagerten Netzwerk, wobei das überlagerte Netzwerk eine Netzwerktopologiestruktur ist, die auf einer Anwendungsschicht, die spezifische Dienste durch Konstruieren einer Netzwerktopologie zwischen Knoten auf der Anwendungsschicht implementiert, operiert, umfassend Netzwerkknoten in einem überlagerten Netzwerk einer Anwendungsschicht, wobei das System ferner Konvergenzknoten, Netzwerkmessungseinheiten, die das Netzwerkschichtprotokoll ausführen, und mindestens eine Messungseinheit, die das Anwendungsschichtprotokoll ausführt, umfasst und die Netzwerkknoten durch die Konvergenzknoten auf die Netzwerkschicht zugreifen;
die Messungseinheit angepasst ist zum Empfangen eines Befehls zur Messung der Zwischenknoten-Netzwerkleistung, gesandt von dem überlagerten Netzwerk der Anwendungsschicht, und Senden des Befehls zur Messung der Zwischenknoten-Netzwerkleistung an die Netzwerkmessungseinheit, die mit den Quellennetzwerkknoten korrespondiert, und die Netzwerkmessungseinheit, die mit den Zielnetzwerkknoten korrespondiert, wobei der Befehl zur Messung der Zwischenknoten-Netzwerkleistung mit den Netzwerkmessungseinheiten korrespondierende Konvergenzknoten-Informationen führt; die Messungseinheit ferner angepasst ist zum Empfangen von Zwischenknoten-Netzwerkleistungen, gesandt von den Netzwerkmessungseinheiten oder anderen Messungseinheiten, Verarbeiten der Zwischenknoten-Netzwerkleistungen, um Zwischenknoten-Netzwerkleistungen zwischen den Quellennetzwerkknoten und den Zielnetzwerkknoten zu erhalten, und Senden der Zwischenknoten-Netzwerkleistungen zwischen den Quellennetzwerkknoten und den Zielnetzwerkknoten an das überlagerte Netzwerk der Anwendungsschicht; und die Netzwerkmessungseinheiten angepasst sind zum Empfangen des von der Messungseinheit weitergeleiteten Befehls zur Messung der Zwischenknoten-Netzwerkleistung und zum Messen von Zwischenknoten-Netzwerkleistungen zwischen den Konvergenzknoten und den Netzwerkknoten, wenn die Netzwerkknoten mit dem gleichen Konvergenzknoten korrespondieren, oder Messen von Zwischenknoten-Netzwerkleistungen zwischen den Konvergenzknoten und den Netzwerkknoten und Zwischenknoten-Netzwerkleistungen zwischen den verschiedenen Konvergenzknoten, wenn die Netzwerkknoten mit verschiedenen Konvergenzknoten korrespondieren.

13. System nach Anspruch 12, wobei
die Messungseinheit ferner angepasst ist zum Speichern korrespondierender Beziehungen zwischen der Messungseinheit, den Netzwerkknoten, den Konvergenzknoten und den Netzwerkmessungseinheiten oder korrespondierender Beziehungen zwischen der Messungseinheit, den Netzwerkknoten und den Netzwerkmessungseinheiten; und, nach Empfangen des Befehls zur Messung von Zwischenknoten-Netzwerkleistung, gesandt von den Netzwerkknoten in dem überlagerten Netzwerk der Anwendungsschicht, Suchen nach den Netzwerkmessungseinheiten und den Konvergenzknoten, die mit den Quellennetzwerkknoten und den Zielnetzwerkknoten korrespondieren, und Weiterleiten des Befehls zur Messung von Zwischenknoten-Netzwerkleistung an die herausgesuchten Netzwerkmessungseinheiten.

14. System nach Anspruch 12, wobei
die Messungseinheit ferner angepasst ist zum Bestimmen, ob der Konvergenzknoten, der mit den Quellennetzwerkknoten korrespondiert, und der Konvergenzknoten, der mit den Zielnetzwerkknoten korrespondiert, die gleichen sind; und
wobei die Netzwerkmessungseinheiten und die Konvergenzknoten in der Netzwerkschicht konfiguriert sind.

## Revendications

1. Procédé de mesure de performances de réseau inter-noeuds dans un réseau superposé, le réseau superposé étant une structure de topologie de réseau fonctionnant sur une couche d'application qui met en oeuvre des services spécifiques en construisant une topologie de réseau entre des noeuds de la couche d'application, comprenant :
la réception, par une ou plusieurs unités de mesure exécutant un protocole de couche d'application, d'une commande de mesure de performance de réseau inter-noeuds envoyée par le réseau superposé de couche d'application ;
la recherche respective d'unités de mesure de réseau et de noeuds de convergence correspondant à des noeuds de réseau sources et à des noeuds de réseau cibles, les unités de mesure de réseau et les noeuds de convergence exécutant un protocole de couche de réseau;
la détermination du fait de savoir si les noeuds de réseau sources et les noeuds de réseau cibles correspondent au même noeud de convergence ;
si les noeuds de réseau sources et les noeuds de réseau cibles correspondent au même noeud de convergence, la mesure, par l'unité de mesure de réseau correspondant aux noeuds de réseau sources, de performances de réseau inter-noeuds entre les noeuds de réseau sources et le noeud de convergence correspondant aux noeuds de réseau sources afin d'obtenir une première performance de réseau inter-noeuds ; et la mesure,
par l'unité de mesure de réseau correspondant aux noeuds de réseau cibles, de performances de réseau inter-noeuds entre les noeuds de réseau cibles et le noeud de convergence correspondant aux noeuds de réseau cibles afin d'obtenir une deuxième performance de réseau inter-noeuds ;
le calcul, par les unités de mesure, de performances de réseau inter-noeuds entre les noeuds de réseau sources et les noeuds de réseau cibles conformément à la première performance de réseau inter-noeuds et à la deuxième performance de réseau inter-noeuds ;
si les noeuds de réseau sources et les noeuds de réseau cibles correspondent à des noeuds de convergence différents, la mesure, par l'unité de mesure de réseau correspondant aux noeuds de réseau sources, de performances de réseau inter-noeuds entre les noeuds de réseau sources et le noeud de convergence correspondant aux noeuds de réseau sources afin d'obtenir une troisième performance de réseau inter-noeuds ; la mesure, par l'unité de mesure de réseau correspondant aux noeuds de réseau cibles, de performances de réseau inter-noeuds entre les noeuds de réseau cibles et le noeud de convergence correspondant aux noeuds de réseau cibles afin d'obtenir une quatrième performance de réseau inter-noeuds ; et la mesure, par l'unité de mesure de réseau correspondant aux noeuds de réseau sources et/ou par l'unité de mesure de réseau correspondant aux noeuds de réseau cibles, de performances de réseau inter-noeuds entre le noeud de convergence correspondant aux noeuds de réseau sources et le noeud de convergence correspondant aux noeuds de réseau cibles afin d'obtenir une cinquième performance de réseau inter-noeuds ; et
le calcul, par les unités de mesure, de performances de réseau inter-noeuds entre les noeuds de réseau sources et les noeuds de réseau cibles conformément à la troisième performance de réseau inter-noeuds, à la quatrième performance de réseau inter-noeuds et à la cinquième performance de réseau inter-noeuds.

2. Procédé selon la revendication 1, dans lequel le processus de recherche respective des unités de mesure de réseau et des noeuds de convergence correspondant aux noeuds de réseau sources et aux noeuds de réseau cibles comprend :
la recherche respective des unités de mesure qui gèrent les noeuds de réseau sources et les noeuds de réseau cibles ;
la recherche, par l'unité de mesure qui gère les noeuds de réseau sources, de relations correspondantes stockées dans ceux-ci afin d'obtenir l'unité de mesure de réseau et le noeud de convergence correspondant aux noeuds de réseau sources ; et
la recherche, par l'unité de mesure qui gère les noeuds de réseau cibles, de relations correspondantes stockées dans ceux-ci afin d'obtenir l'unité de mesure de réseau et le noeud de convergence correspondant aux noeuds de réseau cibles,
dans lequel les relations correspondantes sont des relations entre les noeuds de réseau, les noeuds de convergence, les unités de mesure de réseau et les unités de mesure, ou des relations entre les noeuds de réseau, les unités de mesure de réseau et les unités de mesure.

3. Procédé selon la revendication 2, dans lequel
les performances de réseau inter-noeuds sont des performances de réseau inter-noeuds non temps réel ;
l'unité de mesure de réseau correspondant aux noeuds de réseau sources stocke la première performance de réseau inter-noeuds ; et l'unité de mesure de réseau correspondant aux noeuds de réseau cibles stocke la deuxième performance de réseau inter-noeuds ; ou l'unité de mesure de réseau correspondant aux noeuds de réseau sources stocke la troisième performance de réseau inter-noeuds ; l'unité de mesure de réseau correspondant aux noeuds de réseau cibles stocke la quatrième performance de réseau inter-noeuds ; et l'unité de mesure de réseau correspondant aux noeuds de réseau sources ou l'unité de mesure de réseau correspondant aux noeuds de réseau cibles stocke la cinquième performance de réseau inter-noeuds ; et
les unités de mesure stockent les performances de réseau inter-noeuds entre les noeuds de réseau sources et les noeuds de réseau cibles.

4. Procédé selon la revendication 2, dans lequel
avant les recherches respectives des unités de mesure qui gèrent les noeuds de réseau sources et les noeuds de réseau cibles, le procédé comprend en outre :
la recherche des noeuds de réseau sources correspondant à des noeuds de réseau superposé sur une couche d'application source et des noeuds de réseau cibles correspondant à des noeuds de réseau superposé sur une couche d'application cible ; et
après le calcul par les unités de mesure des performances de réseau inter-noeuds entre les noeuds de réseau sources et les noeuds de réseau cibles, le procédé comprend en outre :
l'envoi des performances de réseau inter-noeuds mesurées entre les noeuds de réseau sources et les noeuds de réseau cibles à un réseau superposé de couche d'application.

5. Procédé selon l'une quelconque des revendications 1 à 4, dans lequel les performances de réseau inter-noeuds comprennent des distances, des retards et des largeurs de bandes entre les noeuds.

6. Unité de mesure de réseau exécutant un protocole de couche de réseau, comprenant un module de réception, un module de mesure et un module de réexpédition, dans laquelle :
le module de réception est apte à recevoir une commande de mesure de performance de réseau inter-noeuds envoyée par une unité de mesure exécutant un protocole de couche d'application et mesurant des performances de réseau inter-noeuds dans un réseau superposé, et à réexpédier la commande de mesure de performance de réseau inter-noeuds au module de mesure ; et
le module de mesure est apte à recevoir la commande de mesure de performance de réseau inter-noeuds réexpédiée par le module de réception, à mesurer des performances de réseau inter-noeuds entre des noeuds de réseau et un noeud de convergence, et à envoyer les performances de réseau inter-noeuds au module de réexpédition si lesdits noeuds de réseau correspondent au même noeud de convergence ; ou à mesurer des performances de réseau inter-noeuds entre des noeuds de réseau et un noeud de convergence et des performances de réseau inter-noeuds entre des noeuds de convergence différents conformément à la commande de mesure de performance de réseau inter-noeuds réexpédiée par le module de réception, et à envoyer les performances de réseau inter-noeuds au module de réexpédition si lesdits noeuds de réseau correspondent à des noeuds de convergence différents ;
le module de réexpédition est apte à réexpédier les performances de réseau inter-noeuds à l'unité de mesure, le réseau superposé étant une structure de topologie de réseau fonctionnant sur une couche d'application qui met en oeuvre des services spécifiques en construisant une topologie de réseau entre des noeuds de la couche d'application.

7. Unité de mesure de réseau selon la revendication 6, dans laquelle
le module de mesure comprend : un sous-module de détermination, un sous-module de traitement et un sous-module de stockage,
le sous-module de détermination étant apte à déterminer si la commande de mesure de performance de réseau inter-noeuds envoyée par le module de réception est une commande de mesure de performance de réseau inter-noeuds temps réel ou une commande de mesure de performance de réseau inter-noeuds non temps réel, et à renvoyer un résultat de détermination au sous-module de traitement ;
le sous-module de traitement étant apte à exécuter un processus en fonction du résultat de la détermination provenant du sous-module de détermination ; si la commande de mesure de performance de réseau inter-noeuds est la commande de mesure de performance de réseau inter-noeuds temps réel, à exécuter la commande de mesure de performance de réseau inter-noeuds, à envoyer directement les performances de réseau inter-noeuds mesurées au module de réexpédition ; et si la commande de mesure de performance de réseau inter-noeuds est la commande de mesure de performance de réseau inter-noeuds non temps réel, à interroger le sous-module de stockage pour déterminer si les éventuelles performances de réseau inter-noeuds devant être recherchées y sont stockées ; et si les performances de réseau inter-noeuds devant être recherchées sont stockées, à lire les performances de réseau inter-noeuds dans le sous-module de stockage et à envoyer les performances de réseau inter-noeuds au module de réexpédition, et dans le cas contraire, à exécuter la commande de mesure de performance de réseau inter-noeuds et à envoyer les performances de réseau inter-noeuds mesurées au sous-module de stockage et au module de réexpédition ; et
le sous-module de stockage étant apte à stocker les performances de réseau inter-noeuds non temps réel envoyées par le sous-module de traitement.

8. Unité de mesure exécutant un protocole de couche d'application, configurée dans un réseau superposé de mesure, dans laquelle le réseau superposé est une structure de topologie de réseau fonctionnant sur une couche d'application qui met en oeuvre des services spécifiques en construisant une topologie de réseau entre des noeuds de la couche d'application, l'unité comprenant un module de traitement de commande de mesure et un module de traitement de performance de réseau inter-noeuds,
le module de traitement de commande de mesure étant apte à recevoir une commande de mesure de performance de réseau inter-noeuds envoyée par un réseau superposé de couche d'application, et à envoyer la commande de mesure de performance de réseau inter-noeuds à une unité de mesure de réseau correspondant à des noeuds de réseau sources et à une unité de mesure de réseau correspondant à des noeuds de réseau cibles ; et
le module de traitement de performance de réseau inter-noeuds étant apte à recevoir des performances de réseau inter-noeuds envoyées par les unités de mesure de réseau, à traiter les performances de réseau inter-noeuds afin d'obtenir des performances de réseau inter-noeuds entre les noeuds de réseau sources et les noeuds de réseau cibles, et à envoyer les performances de réseau inter-noeuds entre les noeuds de réseau sources et les noeuds de réseau cibles au réseau superposé de couche d'application,
la performance de réseau inter-noeuds étant mesurée entre des noeuds de réseau et un noeud de convergence si lesdits noeuds de réseau correspondent au même noeud de convergence ou entre des noeuds de réseau et un noeud de convergence et entre des noeuds de convergence différents si lesdits noeuds de réseau correspondent à des noeuds de convergence différents.

9. Unité de mesure selon la revendication 8, dans laquelle le module de traitement de commande de mesure comprend un premier sous-module de réception, un premier sous-module de stockage, un sous-module d'interrogation et un premier sous-module d'envoi ;
le premier sous-module de stockage est apte à stocker des relations correspondantes entre les noeuds de réseau, les noeuds de convergence, les unités de mesure de réseau et les unités de mesure lors du déploiement d'un réseau ;
le sous-module d'interrogation est apte à effectuer respectivement des recherches des unités de mesure de réseau, des noeuds de convergence et des unités de mesure correspondant aux noeuds de réseau sources et aux noeuds de réseau cibles à partir des relations correspondantes stockées dans le premier sous-module de stockage conformément à la commande de mesure de performance de réseau inter-noeuds envoyée par le premier sous-module de réception ; et
le premier sous-module d'envoi est apte à respectivement envoyer la commande de mesure de performance de réseau inter-noeuds aux unités de mesure de réseau correspondant aux noeuds de réseau sources et aux noeuds de réseau cibles interrogés par le sous-module d'interrogation ;
et le module de traitement de performance de réseau inter-noeuds comprend un deuxième sous-module de réception, un sous-module de calcul et un deuxième sous-module d'envoi ;
le deuxième sous-module de réception est apte à recevoir les performances de réseau inter-noeuds envoyées par les unités de mesure de réseau, les performances de réseau inter-noeuds comprenant des performances de réseau entre les noeuds de réseau et les noeuds de convergence, ou les performances de réseau inter-noeuds comprenant des performances de réseau entre les noeuds de réseau et les noeuds de convergence, et les performances de réseau entre les noeuds de convergence différents ;
le sous-module de calcul est apte à calculer les performances de réseau inter-noeuds entre les noeuds de réseau sources et les noeuds de réseau cibles conformément aux performances de réseau inter-noeuds reçues par le deuxième module de réception, et à envoyer les performances de réseau inter-noeuds calculées au deuxième sous-module d'envoi ; et
le deuxième sous-module d'envoi est apte à recevoir les performances de réseau inter-noeuds entre les noeuds de réseau sources et les noeuds de réseau cibles, et à réexpédier les performances de réseau inter-noeuds entre les noeuds de réseau sources et les noeuds de réseau cibles au réseau superposé de couche d'application.

10. Unité de mesure selon la revendication 9, comprenant en outre : un module de stockage et un module de traitement de détermination,
le module de stockage étant apte à stocker des performances de réseau non temps réel entre les noeuds de réseau sources et les noeuds de réseau cibles ;
le module de traitement de détermination étant apte à recevoir la commande de mesure de performance de réseau inter-noeuds envoyée par le réseau superposé de couche d'application, et à déterminer si la commande de mesure de performance de réseau inter-noeuds est une commande de mesure de performance de réseau inter-noeuds temps réel ou une commande de mesure de performance de réseau inter-noeuds non temps réel ;
si la commande de mesure de performance de réseau inter-noeuds est la commande de mesure de performance de réseau inter-noeuds temps réel, le module de traitement de détermination réexpédiant la commande de mesure de performance de réseau inter-noeuds envoyée par le réseau superposé de couche d'application au module de traitement de commande de mesure ; et
si la commande de mesure de performance de réseau inter-noeuds est la commande de mesure de performance de réseau inter-noeuds non temps réel, le module de traitement de détermination interrogeant le module de stockage pour déterminer si les performances de réseau entre les noeuds de réseau sources et les noeuds de réseau cibles devant être recherchées y sont stockées ; et si les performances de réseau entre les noeuds de réseau sources et les noeuds de réseau cibles devant être interrogés sont stockées, le module de traitement de détermination lisant les performances de réseau entre les noeuds de réseau sources et les noeuds de réseau cibles dans le module de stockage et envoyant les performances de réseau au deuxième sous-module d'envoi ; dans le cas contraire, le module de traitement de détermination réexpédiant la commande de mesure de performance de réseau inter-noeuds envoyée par le réseau superposé de couche d'application au module de traitement de commande de mesure, et indiquant au deuxième sous-module d'envoi de réexpédier les performances de réseau inter-noeuds entre les noeuds de réseau sources et les noeuds de réseau cibles au module de stockage.

11. Unité de mesure selon la revendication 9 ou 10, dans laquelle, si l'unité de mesure est une unité de mesure d'accès dans le réseau superposé de mesure, le deuxième sous-module de réception est en outre apte à recevoir des performances de réseau inter-noeuds envoyées par d'autres unités de mesure, et à envoyer les performances de réseau inter-noeuds envoyées par les unités de mesure de réseau et les autres unités de mesure au sous-module de calcul ;
dans laquelle, si l'unité de mesure n'est pas une unité de mesure d'accès dans le réseau superposé de mesure, le deuxième sous-module de réception est en outre apte à envoyer les performances de réseau inter-noeuds envoyées par les unités de mesure de réseau à l'unité de mesure d'accès dans le réseau superposé de mesure ; et le deuxième sous-module d'envoi est en outre apte à réexpédier les performances de réseau inter-noeuds entre les noeuds de réseau sources et les noeuds de réseau cibles obtenues par le sous-module de calcul à l'unité de mesure d'accès dans le réseau superposé de mesure.

12. Système de mesure de performances de réseau inter-noeuds dans un réseau superposé, dans lequel le réseau superposé est une structure de topologie de réseau fonctionnant sur une couche d'application qui met en oeuvre des services spécifiques en construisant une topologie de réseau entre des noeuds de la couche d'application, comprenant des noeuds de réseau dans un réseau superposé de couche d'application, le système comprenant en outre des noeuds de convergence, des unités de mesure de réseau exécutant un protocole de couche de réseau et au moins une unité de mesure exécutant un protocole de couche d'application, et les noeuds de réseau accédant à la couche de réseau par l'intermédiaire des noeuds de convergence ;
l'unité de mesure étant apte à recevoir une commande de mesure de performance de réseau inter-noeuds envoyée par le réseau superposé de couche d'application, et à envoyer la commande de mesure de performance de réseau inter-noeuds à l'unité de mesure de réseau correspondant à des noeuds de réseau sources et à l'unité de mesure de réseau correspondant à des noeuds de réseau cibles, la commande de mesure de performance de réseau inter-noeuds acheminant des informations de noeuds de convergence correspondant aux unités de mesure de réseau ; l'unité de mesure étant en outre apte à recevoir des performances de réseau inter-noeuds envoyées par les unités de mesure de réseau ou par d'autres unités de mesure, à traiter les performances de réseau inter-noeuds afin d'obtenir des performances de réseau inter-noeuds entre les noeuds de réseau sources et les noeuds de réseau cibles, et à envoyer les performances de réseau inter-noeuds entre les noeuds de réseau sources et les noeuds de réseau cibles au réseau superposé de couche d'application ; et
les unités de mesure de réseau étant aptes à recevoir la commande de mesure de performance de réseau inter-noeuds réexpédiée par l'unité de mesure, et à mesurer des performances de réseau inter-noeuds entre les noeuds de convergence et les noeuds de réseau si lesdits noeuds de réseau correspondent au même noeud de convergence, ou à mesurer des performances de réseau inter-noeuds entre les noeuds de convergence et les noeuds de réseau, et des performances de réseau inter-noeuds entre les noeuds de convergence différents, si lesdits noeuds de réseau correspondent à des noeuds de convergence différents.

13. Système selon la revendication 12, dans lequel
l'unité de mesure est en outre apte à stocker des relations correspondantes entre l'unité de mesure, les noeuds de réseau, les noeuds de convergence et les unités de mesure de réseau ou des relations correspondantes parmi l'unité de mesure, les noeuds de réseau et les unités de mesure de réseau ; et après réception de la commande de mesure de performance de réseau inter-noeuds envoyée par les noeuds de réseau dans le réseau superposé de couche d'application, elle recherche les unités de mesure de réseau et les noeuds de convergence correspondant aux noeuds de réseau sources et aux noeuds de réseau cibles, et réexpédie la commande de mesure de performance de réseau inter-noeuds aux unités de mesure de réseau recherchées.

14. Système selon la revendication 12, dans lequel
l'unité de mesure est en outre apte à déterminer si le noeud de convergence correspondant aux noeuds de réseau sources et le noeud de convergence correspondant aux noeuds de réseau cibles sont identiques ; et
dans lequel les unités de mesure de réseau et les noeuds de convergence sont configurés dans la couche de réseau.
